# EUROPEAN PATENT APPLICATION

(11) **EP 4 541 164 A1**
(43) Date of publication of application: **23.04.2025**
(21) Application number: 23831323.3
(22) Date of filing: 23.06.2023
(51) Int. Cl.: A01B 69/00, G05D 1/20

(54) **CONTROL SYSTEM, CONTROL METHOD, AND DELIVERY VEHICLE**

(30) Priority: 28.06.2022 JP 2022103747
(71) Applicant: Kubota Corporation, Osaka 556-8601 (JP)
(72) Inventor: MIKI, Jumpei, Sakai-shi, Osaka 590-0908 (JP)
(74) Representative: Cabinet Beau de Loménie
(86) International application number: PCT/JP2023/023410
(87) International publication number: WO 2024/004881

(57) **Abstract**

A control system according to one embodiment of the present disclosure is a control system for controlling a harvesting operation performed by an agricultural machine, which harvests crop while traveling in a field by automated driving, and a transport vehicle, which receives harvested crop discharged from the agricultural machine while traveling alongside the agricultural machine by automated driving. The control system includes a first controller that controls an operation of discharging the harvested crop of the agricultural machine, and a second controller that controls an operation of the transport vehicle so that the transport vehicle travels by automated driving. The second controller performs a control to increase a distance between the agricultural machine and the transport vehicle while the agricultural machine makes a turn, compared to when the agricultural machine is traveling while harvesting the crop.

## Description

### TECHNICAL FIELD

The present disclosure relates to a control system, a control method, and a transport vehicle used for harvesting crop.

### BACKGROUND ART

Research and development of smart agriculture, which utilizes ICT (Information and Communication Technology) and IoT (Internet of Things), is being carried out as next-generation agriculture. Research and development is also being carried out with the aim of realizing automated driving and unmanned driving of agricultural machines such as tractors and harvesters used in fields. For example, agricultural machines that perform agricultural work while traveling in fields by automated driving using a positioning system such as GNSS (Global Navigation Satellite System) that can perform precise positioning are being put into practical use.

Patent Document No. 1 discloses a harvester that travels by automated driving while harvesting the crop in the field. The harvester can harvest the crop by traveling along a pre-set travel route in the field.

### CITATION LIST

### PATENT LITERATURE

Patent Document No. 1: JP 2018-073399 A

### SUMMARY OF INVENTION

### TECHNICAL PROBLEM

There is a need to harvest crop in fields more efficiently.

### SOLUTION TO PROBLEM

A control system according to one embodiment of the present disclosure is a control system for controlling a harvesting operation performed by an agricultural machine, which harvests crop while traveling in a field by automated driving, and a transport vehicle, which receives harvested crop discharged from the agricultural machine while traveling alongside the agricultural machine by automated driving, the control system including: a first controller that controls an operation of discharging the harvested crop of the agricultural machine; and a second controller that controls an operation of the transport vehicle so that the transport vehicle travels by automated driving, wherein the second controller performs a control to increase a distance between the agricultural machine and the transport vehicle while the agricultural machine makes a turn, compared to when the agricultural machine is traveling while harvesting the crop.

A transport vehicle according to one embodiment of the present disclosure is a transport vehicle for transporting harvested crop that is harvested in a field, the transport vehicle including: a container that receives and stores the harvested crop discharged from an agricultural machine that harvests crop in a field; and a controller that controls an operation of the transport vehicle so that the transport vehicle travels by automated driving, wherein the controller is configured to: perform a control to cause the transport vehicle to travel alongside the agricultural machine when the agricultural machine is traveling while harvesting the crop and discharging the harvested crop; and perform a control to increase a distance between the agricultural machine and the transport vehicle when the agricultural machine is making a turn, compared to when the agricultural machine is traveling while harvesting the crop.

A control method according to one embodiment of the present disclosure is a control method for controlling a harvesting operation performed by an agricultural machine, which harvests crop while traveling in a field by automated driving, and a transport vehicle, which receives harvested crop discharged from the agricultural machine while traveling alongside the agricultural machine by automated driving, the control method including: controlling an operation of discharging the harvested crop of the agricultural machine; and performing a control to increase a distance between the agricultural machine and the transport vehicle while the agricultural machine makes a turn, compared to when the agricultural machine is traveling while harvesting the crop.

A control method according to one embodiment of the present disclosure is a control method for controlling a transport vehicle that travels by automated driving and transports harvested crop that is harvested in a field, wherein: the transport vehicle includes a container that receives and stores the harvested crop discharged from an agricultural machine that harvests crop in a field, the control method including: performing a control to cause the transport vehicle to travel alongside the agricultural machine when the agricultural machine is traveling while harvesting the crop and discharging the harvested crop; and performing a control to increase a distance between the agricultural machine and the transport vehicle when the agricultural machine is making a turn, compared to when the agricultural machine is traveling while harvesting the crop.

General or specific aspects of the present disclosure may be realized by an apparatus, system, method, integrated circuit, computer program, or computer readable non-transitory storage medium, or any combination thereof. The computer readable storage medium may include a volatile storage medium or a nonvolatile storage medium. The apparatus may be composed of a plurality of apparatuses. Where the apparatus is composed of two or more apparatuses, the two or more apparatuses may be arranged within a single device or may be arranged separately within two or more separate devices.

### ADVANTAGEOUS EFFECTS OF INVENTION

According to an embodiment of the present disclosure, an agricultural machine and a transport vehicle travel alongside each other while maintaining a positional relationship in which the transport vehicle can receive the harvested crop discharged from the agricultural machine. Crop in fields can be harvested efficiently by having the agricultural machine, which harvests the crop, and the transport vehicle, which receives and stores the harvested crop discharged from the agricultural machine, travel alongside each other. On the other hand, controlling the agricultural machine and the transport vehicle to turn while maintaining the positional relationship described above is complicated.

By increasing the distance between the agricultural machine and the transport vehicle while the agricultural machine is making a turn, it is possible to prevent the presence of the transport vehicle from interfering with the smooth turning of the agricultural machine. For example, even when making a complicated turn involving backing up, the agricultural machine can perform the turn smoothly.

By increasing the distance between the agricultural machine and the transport vehicle while the agricultural machine is making a turn, it is possible to prevent the presence of the agricultural machine from interfering with the smooth turning of the transport vehicle.

### BRIEF DESCRIPTION OF DRAWINGS

FIG. **1** is a diagram illustrating an overview of an agricultural management system according to an exemplary embodiment of the present disclosure.
FIG. **2** is a side view schematically showing an example of a harvester.
FIG. **3** is a side view schematically showing an example of a transport vehicle.
FIG. **4** is a block diagram showing an example configuration of the harvester.
FIG. **5** is a block diagram showing an example configuration of the transport vehicle.
FIG. **6** is a block diagram showing an example configuration of a management device and a terminal device.
FIG. **7** is a diagram showing a harvesting operation of harvesting crop in the field using the harvester and the transport vehicle.
FIG. **8** is a flow chart showing an example control for the harvesting operation of harvesting the crop in the field using the harvester and the transport vehicle.
FIG. **9** is a diagram showing an example of the harvester that travels automatically along a target route in the field and the transport vehicle that travels alongside the harvester.
FIG. **10** is a diagram showing the harvester and the transport vehicle having moved forward while traveling alongside each other.
FIG. **11** is a diagram showing how the transport vehicle, having traveled alongside the harvester, moves away from the harvester.
FIG. **12** is a diagram showing the harvester turning along a turning route.
FIG. **13** is a diagram showing the harvester having turned and traveling along the next main route.
FIG. **14** is a diagram showing the transport vehicle having reached a position for traveling alongside the harvester.
FIG. **15** is a diagram showing an example of a turning route.
FIG. **16** is a diagram showing how the transport vehicle, which has traveled alongside the harvester, moves away from the harvester.
FIG. **17** is a diagram showing the harvester turning along the turning route.
FIG. **18** is a diagram showing the harvester turning along the turning route.
FIG. **19** is a diagram showing the transport vehicle waiting at a predetermined position in a field.
FIG. **20** is a diagram showing the transport vehicle moving toward a position where the transport vehicle can receive the harvested crop discharged from the harvester.
FIG. **21** is a diagram showing the transport vehicle having reached a position where the transport vehicle can receive the harvested crop discharged from the harvester.
FIG. **22** is a diagram showing the transport vehicle moving to a storage shed for storing the harvested crop.

### DESCRIPTION OF EMBODIMENTS

### (Definition of terms)

In the present disclosure, an "agricultural machine" refers to a machine for agricultural applications. The agricultural machine of the present disclosure is a mobile agricultural machine capable of performing agricultural work while moving. Examples of agricultural machines include tractors, harvesters, rice transplanters, vehicles for crop management, vegetable transplanters, mowers, seeders, spreaders, and mobile robots for agriculture. Not only may an agricultural machine such as a tractor function as an "agricultural machine" alone by itself, but also a combination of an agricultural machine and an implement that is attached to, or towed by, the agricultural machine may function as an "agricultural machine". For the ground surface inside a field, the agricultural machine performs agricultural work such as tilling, seeding, preventive pest control, manure spreading, planting of crop, or harvesting. Such agricultural work or tasks may be referred to as "groundwork", or simply as "work" or "tasks". Travel of a vehicle-type agricultural machine performed while the agricultural machine also performs agricultural work may be referred to as "tasked travel".

"Automated driving" refers to controlling the movement of an agricultural machine by the action of a controller, rather than through manual operations of a driver. An agricultural machine that performs automated driving may be referred to as an "automated driving agricultural machine" or a "robotic agricultural machine". During automated driving, not only the movement of the agricultural machine, but also the operation of agricultural work (e.g., the operation of an implement) may be controlled automatically. In the case where the agricultural machine is a vehicle-type machine, travel of the agricultural machine via automated driving will be referred to as "self-traveling". The controller may control at least one of: steering that is required in the movement of the agricultural machine; adjustment of the moving speed; and beginning and ending of a move. In the case of controlling an agricultural machine having an implement attached thereto, the controller may control raising or lowering of the implement, beginning and ending of an operation of the implement, and so on. A move based on automated driving may include not only moving of an agricultural machine that goes along a predetermined path toward a destination, but also moving of an agricultural machine that follows a target of tracking. An agricultural machine that performs automated driving may also move partly based on the user's instructions. Moreover, an agricultural machine that performs automated driving may operate not only in an automated driving mode but also in a manual driving mode, where the agricultural machine moves through manual operations of the driver. When performed not manually but through the action of a controller, the steering of an agricultural machine will be referred to as "automatic steering". A portion of, or the entirety of, the controller may reside outside the agricultural machine. Control signals, commands, data, etc., may be communicated between the agricultural machine and a controller existing outside the agricultural machine. An agricultural machine that performs automated driving may move autonomously while sensing the surrounding environment, without any person being involved in the controlling of the movement of the agricultural machine. An agricultural machine that is capable of autonomous movement is able to travel inside the field or outside the field (e.g., on roads) in an unmanned manner. During an autonomous move, operations of detecting and avoiding obstacles may be performed.

"Work plan" is data defining a plan of one or more tasks of agricultural work to be performed by an agricultural machine. The work plan may include, for example, information representing the order of the tasks of agricultural work to be performed by an agricultural machine and the field where each of the tasks of agricultural work is to be performed. The work plan may include information representing the day and time each of the tasks of agricultural work is to be performed. The work plan may be created by a processing device communicating with the agricultural machine to manage the agricultural work, or by a processing device mounted on the agricultural machine. The processing device can create a work plan based on, for example, information input by the user (agricultural business executive, agricultural worker, etc.) manipulating a terminal device. In this specification, the processing device communicating with the agricultural machine to manage the agricultural work will be referred to as a "management device". The management device may manage agricultural work of a plurality of agricultural machines. In this case, the management device may create a work plan including information on each task of agricultural work to be performed by each of the plurality of agricultural machines. The work plan may be downloaded to each of the agricultural machines and stored in a storage device. In order to perform the scheduled agricultural work, each agricultural machine can automatically go to the field and perform the agricultural work according to the work plan.

An "environment map" is data that representing with a predetermined coordinate system, the position or the region of an object existing in the environment where the agricultural machine moves. The environment map may be referred to simply as a "map" or "map data". The coordinate system defining the environment map may be a world coordinate system such as a geographic coordinate system fixed to the globe, for example. The environment map may include information other than the position (e.g., attribute information or other types of information) for objects that are present in the environment. The environment map encompasses various types of maps, such as a point cloud map or a grid map. Data on a local map or a partial map that is generated or processed in a process of constructing the environment map is also referred to as a "map" or "map data".

"Farm road" means a road used mainly for agricultural purposes. A farm road is not limited to a road paved with asphalt, and encompasses unpaved roads covered with soil, gravel, etc. A farm road encompasses roads (including private roads) on which only vehicle-type agricultural machines (e.g., agricultural machines such as tractors) are allowed to travel and roads on which general vehicles (passenger cars, trucks, buses, etc.) are allowed to travel. The agricultural machines may automatically travel on a public road in addition to a farm road. The public road is a road maintained for traffic of general vehicles.

### (Embodiments)

Hereinafter, embodiments of the present disclosure will be described. Note, however, that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. Note that the accompanying drawings and the following description, which are provided by the present inventors so that those skilled in the art can sufficiently understand the present disclosure, are not intended to limit the scope of the claims. In the following description, elements having identical or similar functions are denoted by identical reference numerals.

The following embodiments are only exemplary, and the techniques according to the present disclosure are not limited to the following embodiments. For example, numerical values, shapes, materials, steps, orders of steps, layout of a display screen, etc., which are indicated in the following embodiments are only exemplary, and admit of various modifications so long as it makes technological sense. Any one implementation may be combined with another so long as it makes technological sense to do so.

An embodiment in which the technology of the present disclosure is applied to the harvester and the transport vehicle, which are examples of agricultural machines, will now be described. The technology of the present disclosure can also be applied to other types of agricultural machines.

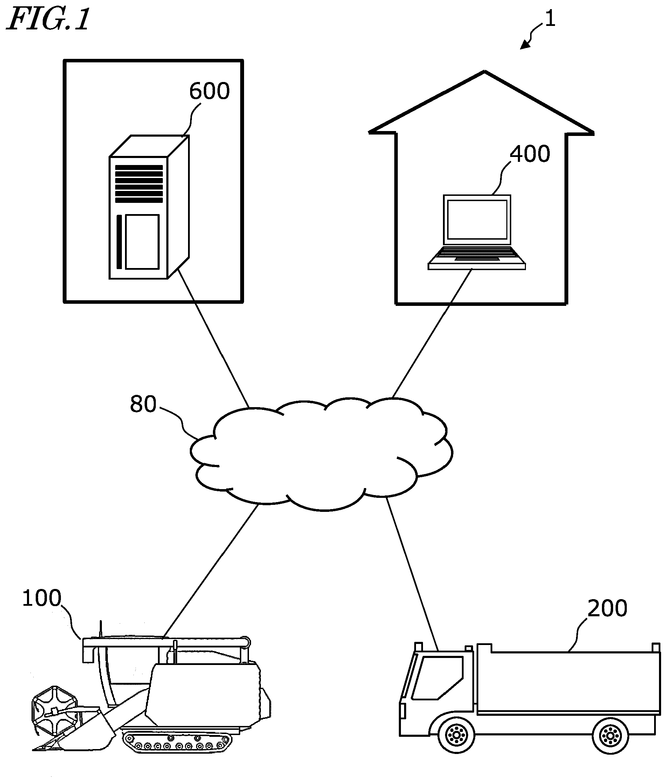

FIG. **1** is a diagram illustrating an overview of an agricultural management system **1** according to an exemplary embodiment of the present disclosure. The agricultural management system **1** shown in FIG. **1** includes a harvester **100,** a transport vehicle **200,** a terminal device **400,** and a management device **600.**

The terminal device **400** is a computer used by a user who remotely monitors the harvester **100** and the transport vehicle **200.** The management device **600** is a computer managed by an operator who operates the agricultural management system **1.** The harvester **100,** the transport vehicle **200,** the terminal device **400,** and the management device **600** can communicate with each other via a network **80.** While FIG. **1** shows one harvester **100** and one transport vehicle **200,** an agricultural management system **1** may include a plurality of harvesters **100** and/or a plurality of transport vehicles **200.** The agricultural management system **1** may include other agricultural machines.

The harvester **100** of the present embodiment may be a combine harvester, for example. The harvester machine **100** cuts the crop in the field, threshes the cut crop, and discharges the harvested crop after threshing. The crop in the field may be plants that can be harvested, such as rice, wheat, corn, soybeans, etc., but there is no limitation thereto.

The transport vehicle **200** of the present embodiment is a vehicle provided with a container for receiving and storing the harvested crop discharged from the harvester **100,** and may be a truck, for example.

The harvester **100** and the transport vehicle **200** has the automated driving function. That is, the harvester **100** and the transport vehicle **200** can travel without manual operation, but by the action of a controller. The controller of the present embodiment is provided inside each of the harvester **100** and the transport vehicle **200,** and can control both the speed and steering of the harvester **100** and the transport vehicle **200.** The harvester **100** and the transport vehicle **200** may travel automatically not only in the field but also outside the field (e.g., on a road).

The harvester **100** and the transport vehicle **200** include devices used for positioning or self-position estimation, such as GNSS receivers and LiDAR sensors. The controllers of the harvester **100** and the transport vehicle **200** cause the harvester **100** and the transport vehicle **200** to travel automatically based on the position of the harvester **100** and the transport vehicle **200** and the information of the target route. The harvester **100** and the transport vehicle **200** may automatically travel along the target route on a road outside the field (e.g., a farm road or a public road). In that case, the harvester **100** and the transport vehicle **200** automatically travel along the road while utilizing data output from sensing devices such as cameras, obstacle sensors, and LiDAR sensors.

The management device **600** is a computer that manages the agricultural work performed by the harvester **100** and the transport vehicle **200.** The management device **600** may be a server computer that centrally manages information regarding fields, for example, on a cloud and supports agriculture by utilizing data on the cloud. The management device **600,** for example, creates a work plan for the harvester **100** and the transport vehicle **200** and causes the harvester **100** and the transport vehicle **200** to perform agricultural work according to the work plan. The management device **600** generates a target route in a field based on information input by a user using the terminal device **400** or another device, for example. The management device **600** may also generate and edit an environment map based on data collected by the harvester **100,** the transport vehicle **200,** and other mobile devices using sensing devices such as LiDAR sensors. The management device **600** transmits generated data of the work plan, the target route, and the environment map to the harvester **100** and the transport vehicle **200.** The harvester **100** and the transport vehicle **200** automatically move and perform agricultural work based on those data.

The terminal device **400** is a computer used by a user who is in a location remote from the harvester **100** and the transport vehicle **200.** The terminal device **400** shown in FIG. **1** is a laptop computer, but there is no limitation thereto. The terminal device **400** may be a stationary computer such as a desktop PC (Personal Computer), or may be a mobile terminal such as a smartphone or a tablet computer. The terminal device **400** can be used to remotely monitor the harvester **100** and the transport vehicle **200,** or to remotely operate the harvester **100** and the transport vehicle **200.** For example, the terminal device **400** can display on a display the images captured by the cameras (imaging devices) provided on the harvester **100** and the transport vehicle **200.** The terminal device **400** can also display on the display a setting screen for a user to input information needed to create a work plan (e.g., a schedule for each agricultural work) for the harvester **100.** When a user inputs the information needed on the setting screen and performs a transmission operation, the terminal device **400** transmits the input information to the management device **600.** The management device **600** creates a work plan based on the information. The terminal device **400** may also include a function for displaying on a display a setting screen for a user to input information needed to set a target route.

The configuration and operation of the system according to the present embodiment will now be described in more detail.

### [1. Configuration]

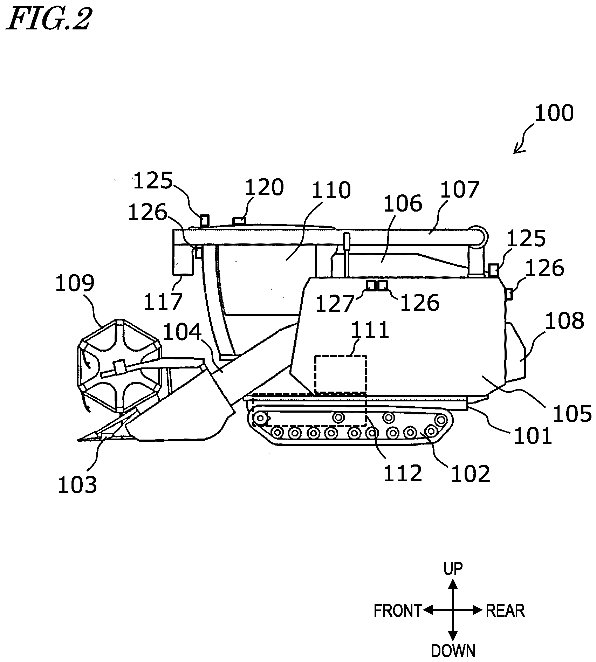

FIG. **2** is a side view schematically showing an example of the harvester **100.** The harvester **100** includes a vehicle body **101** and a travel device **102.** The illustrated travel device **102** is a crawler-type travel device, but it may also be a travel device that includes wheels with tires. A cabin **110** is provided above the vehicle body **101.**

A cutting device **103** that cuts the crop is provided in a height-adjustable manner in front of the travel device **102.** A reel **109** for raising the stalk portions of the crop is provided in a height-adjustable manner upward of the cutting device **103.** A threshing device **105** and a tank **106** for storing the harvested crop are arranged side by side rearward of the cabin **110.** The threshing device **105** threshes the harvested crop. The tank **106** stores the harvested crop obtained by threshing the grain, etc. A straw disposal device **108** is provided rearward of the threshing device **105.** The straw disposal device **108** finely cuts, and discharges to the outside, the stalk portion, etc., after the harvest, such as grain, has been removed.

A conveyer device **104** is provided between the cutting device **103** and the threshing device **105** for conveying the harvested crop. The tank **106** is provided with a discharge device **107** for discharging the harvested crop from the tank **106.** The harvested crop is discharged from a discharge outlet **117** at the tip of the cylindrical-shaped discharge device **107** to the outside. The discharge device **107** is capable of an up-down action and a rotation action, and can change the position of the discharge outlet **117.** The configuration and the operation of the cutting device **103,** the conveyer device **104,** the threshing device **105,** the discharge device **107,** the straw disposal device **108,** the reel **109,** etc., are known in the art, and the detailed description thereof will be omitted herein.

The harvester **100** of the present embodiment can operate both in the manual driving mode and in the automated driving mode. In the automated driving mode, the harvester **100** can travel unmanned. In the automated driving mode, the harvester **100** can travel unmanned while performing the operation of harvesting the crop in the field.

As shown in FIG. **2****,** the harvester **100** includes a prime mover (engine) **111** and a transmission **112.** A driver seat, a control lever, an operation terminal, and operation switches are provided inside the cabin **110.**

The harvester **100** may include at least one sensing device that senses the environment around the harvester **100** and a controller that processes the sensing data output from the at least one sensing device. The harvester **100** includes a plurality of sensing devices. The sensing devices may be LiDAR sensors **125,** cameras **126,** and obstacle sensors **127.**

The cameras **126** may be provided on the front, back, left, and right of the harvester **100,** for example. The cameras **126** capture images of the environment around the harvester **100** and generate image data. The images captured by the cameras **126** may be output to the controller mounted on the harvester **100** and may be transmitted to the terminal device **400** for remote monitoring. The images may also be used to monitor the harvester **100** during unmanned driving.

The LiDAR sensors **125** illustrated in FIG. 2 are arranged at the front and rear of the harvester **100.** The LiDAR sensors **125** may be further arranged at the side of the harvester **100.** The harvester **100** may include a plurality of LiDAR sensors arranged at different positions and in different orientations. The LiDAR sensors **125** may be 3D-LiDAR sensors, but may also be 2D-LiDAR sensors. The LiDAR sensors **125** sense the environment around the harvester **100** and output the sensing data. The LiDAR sensors **125** repeatedly output sensor data representing the distance and direction to measurement points of objects present in the surrounding environment, or the two-dimensional or three-dimensional coordinate values of the measurement points. The sensor data output from the LiDAR sensors **125** are processed by the controller of the harvester **100.** The controller can perform self-position estimation for the harvester **100** by matching the sensor data with the environment map. The controller can further detect objects such as obstacles present around the harvester **100** based on the sensor data. The controller may generate or edit an environment map using an algorithm such as SLAM (Simultaneous Localization and Mapping), for example.

The obstacle sensors **127** illustrated in FIG. **2** are arranged on the side of the harvester **100.** The obstacle sensors **127** may also be arranged at other locations. For example, the obstacle sensors **127** may be arranged at the front and rear of the harvester **100.** The obstacle sensors **127** may include, for example, a laser scanner or an ultrasonic sonar. The obstacle sensors **127** are used to detect obstacles in the surroundings during automated travel and to stop or detour the harvester **100.** The LiDAR sensors **125** may be used as one of the obstacle sensors **127.**

The harvester **100** further includes a GNSS unit **120.** The GNSS unit **120** includes a GNSS receiver. The GNSS receiver may include an antenna that receives signals from GNSS satellites and a processor that calculates the position of the harvester **100** based on the signals received by the antenna. The GNSS unit **120** receives satellite signals transmitted from a plurality of GNSS satellites and performs positioning based on the satellite signals. GNSS is a generic term for satellite positioning systems such as GPS (Global Positioning System), QZSS (Quasi-Zenith Satellite System, e.g., MICHIBIKI), GLONASS, Galileo, and BeiDou. While the GNSS unit **120** of the present embodiment is provided at the top of the cabin **105,** it may be provided at other locations.

The GNSS unit **120** may include an inertial measurement unit (IMU). Position data may be complemented using signals from the IMU. The IMU can measure the tilt and minute movements of the harvester **100.** Using data acquired by the IMU, the positioning performance can be improved by complementing the position data based on the satellite signals.

The controller of the harvester **100** may use the sensing data acquired by sensing devices such as the cameras **126** and/or the LiDAR sensors **125** in addition to the positioning results by the GNSS unit **120** for positioning. If there are geographic objects that function as characteristic points in the environment in which the harvester **100** is traveling, the position and orientation of the harvester **100** can be estimated with high precision based on data acquired by the cameras **126** and/or the LiDAR sensors **125** and the environment map stored in the storage device in advance. By correcting or complementing the position data based on satellite signals using data acquired by the cameras **126** and/or the LiDAR sensors **125,** it is possible to identify the position of the harvester **100** with higher precision.

The prime mover **111** may be a diesel engine, for example. An electric motor may be used instead of a diesel engine. The transmission **112** can vary the propulsion and traveling speed of the harvester **100** by changing the gear. The transmission **112** can also switch between forward and reverse for the harvester **100.**

In an embodiment where the harvester **100** includes the crawler-type travel device **102,** the traveling direction of the harvester **100** can be changed by making the rotation speeds of the left wheels and the right wheels with an endless track attached thereto different from each other, or by making the rotation directions of the left wheels and the right wheels different from each other. In an embodiment where the harvester **100** includes a travel device having wheels with tires, the harvester **100** includes a power steering device, and the travel direction of the harvester **100** can be changed by controlling the power steering device to change the steer angle (also referred to as the "steering angle") of the steering wheel.

While the harvester **100** shown in FIG. **2** is compatible with human driving, the harvester **100** may be compatible only with unmanned driving. In that case, the harvester **100** may not include elements required only for human driving, such as the cabin **110,** the steering device, and the driver seat. The unmanned harvester **100** can travel autonomously or by remote control by a user.

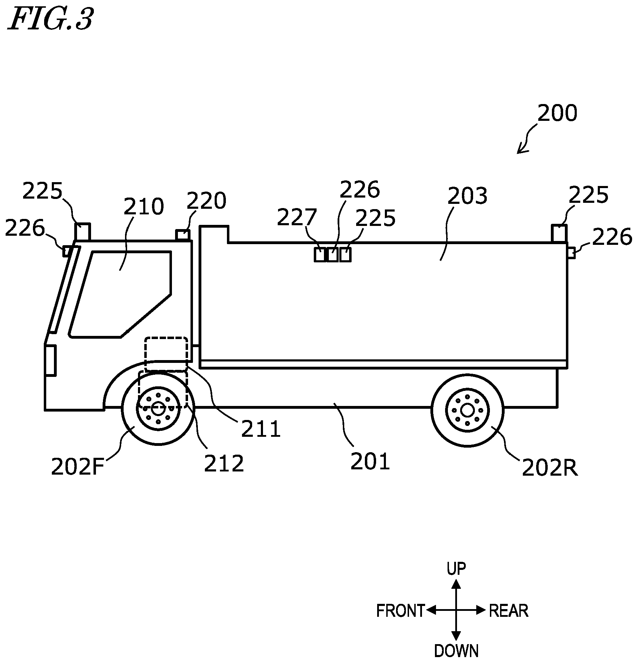

FIG. **3** is a side view schematically showing an example of the transport vehicle **200.** The transport vehicle **200** of the present embodiment can operate both in the manual driving mode and in the automated driving mode. In the automated driving mode, the transport vehicle **200** can travel unmanned.

As shown in FIG. **3****,** the transport vehicle **200** includes a vehicle body **201,** a prime mover (engine) **211,** a transmission **212,** a cabin **210,** and a load bed **203.** The vehicle body **201** includes wheels **202** with tires. The wheels **202** include a pair of front wheels **202F** and a pair of rear wheels **202R.** One or both of the front wheels **202F** and the rear wheels **202R** may be a plurality of wheels (crawlers) with an endless track attached thereto, rather than wheels with tires. A driver seat, a steering device, an operation terminal, and operation switches are provided inside the cabin **210.**

The transport vehicle **200** may include a sensing device that senses the environment around the transport vehicle **200** and a controller that processes the sensing data output from the sensing device. The transport vehicle **200** includes a plurality of sensing devices. The sensing device may be LiDAR sensors **225,** cameras **226,** and obstacle sensors **227.**

The cameras **226** may be provided on the front, back, left, and right of the transport vehicle **200,** for example. The cameras **226** capture images of the environment around the transport vehicle **200** and generate image data. The images captured by the cameras **226** may be output to the controller mounted on the transport vehicle **200** and may be transmitted to the terminal device **400** for remote monitoring. The images may also be used to monitor the transport vehicle **200** during unmanned driving.

The transport vehicle **200** may include a plurality of LiDAR sensors arranged at different positions and in different orientations. The LiDAR sensors **225** illustrated in FIG. **3** are provided on the front, back, left, and right of the transport vehicle **200.** The LiDAR sensors **225** may be 3D-LiDAR sensors, but may also be 2D-LiDAR sensors. The LiDAR sensors **225** sense the environment around the transport vehicle **200** and output the sensing data. The LiDAR sensors **225** repeatedly output sensor data representing the distance and direction to measurement points of objects present in the surrounding environment, or the three-dimensional or two-dimensional coordinate values of the measurement points. The sensor data output from the LiDAR sensors **225** are processed by the controller of the transport vehicle **200.** The controller can perform self-position estimation for the transport vehicle **200** by matching the sensor data with the environment map. The controller can further detect objects such as obstacles present around the transport vehicle **200.** The controller can generate or edit an environment map using an algorithm such as SLAM, for example.

The obstacle sensor **227** illustrated in FIG. **3** is arranged on the side of the transport vehicle **200.** The obstacle sensor **227** may also be arranged at other locations. For example, the obstacle sensor **227** may be arranged at the front and rear of the transport vehicle **200.** The obstacle sensor **227** may include, for example, a laser scanner or an ultrasonic sonar. The obstacle sensor **227** is used to detect obstacles in the surroundings during automated travel and to stop or detour the transport vehicle **200.** The LiDAR sensors **225** may be used as one of the obstacle sensors **227.**

The transport vehicle **200** further includes a GNSS unit **220.** The GNSS unit **220** includes a GNSS receiver. The GNSS receiver may include an antenna that receives signals from GNSS satellites and a processor that calculates the position of the transport vehicle **200** based on the signals received by the antenna. The GNSS unit **220** receives satellite signals transmitted from a plurality of GNSS satellites and performs positioning based on the satellite signals. While the GNSS unit **220** of the present embodiment is provided at the top of the cabin **210,** it may be provided at other locations.

The GNSS unit **220** may include an IMU, and position data can be complemented using signals from the IMU. The IMU can measure the tilt and minute movements of the transport vehicle **200.** Using data acquired by the IMU, the positioning performance can be improved by complementing the position data based on the satellite signals.

The controller of the transport vehicle **200** may use the sensing data acquired by sensing devices such as the cameras **226** and/or the LiDAR sensors **225** in addition to the positioning results by the GNSS unit **220.** If there are geographic objects that function as characteristic points in the environment in which the transport vehicle **200** is traveling, the position and orientation of the transport vehicle **200** can be estimated with high precision based on data acquired by the cameras **226** and/or the LiDAR sensor **225** and the environment map stored in the storage device in advance. By correcting or complementing the position data based on satellite signals using data acquired by the cameras **226** and/or the LiDAR sensor **225,** it is possible to identify the position of the transport vehicle **200** with higher precision.

The prime mover **211** may be a diesel engine, for example. An electric motor may be used instead of a diesel engine. The transmission **212** can vary the propulsion and traveling speed of the transport vehicle **200** by changing the gear. The transmission **212** can also switch between forward and reverse for the transport vehicle **200.**

The steering device provided in the transport vehicle **200** includes a steering wheel, a steering shaft connected to the steering wheel, and a power steering device that assists the steering by the steering wheel. The front wheels **202F** are steering wheels, and it is possible to change the direction of travel of the transport vehicle **200** by changing the steer angle (steering angle). The steering angle of the front wheels **202F** can be changed by operating the steering wheel. The power steering device includes a hydraulic device or an electric motor that supplies auxiliary power to change the steering angle of the front wheels **202F.** When automatic steering is performed, the steering angle is automatically adjusted by the force from the hydraulic device or the electric motor as controlled by the controller arranged in the transport vehicle **200.**

While the transport vehicle **200** shown in FIG. **3** is compatible with human driving, the transport vehicle **200** may be compatible only with unmanned driving. In that case, the transport vehicle **200** may not include elements required only for human driving, such as the cabin **210,** the steering device, and the driver seat. The unmanned transport vehicle **200** can travel autonomously or by remote control by a user.

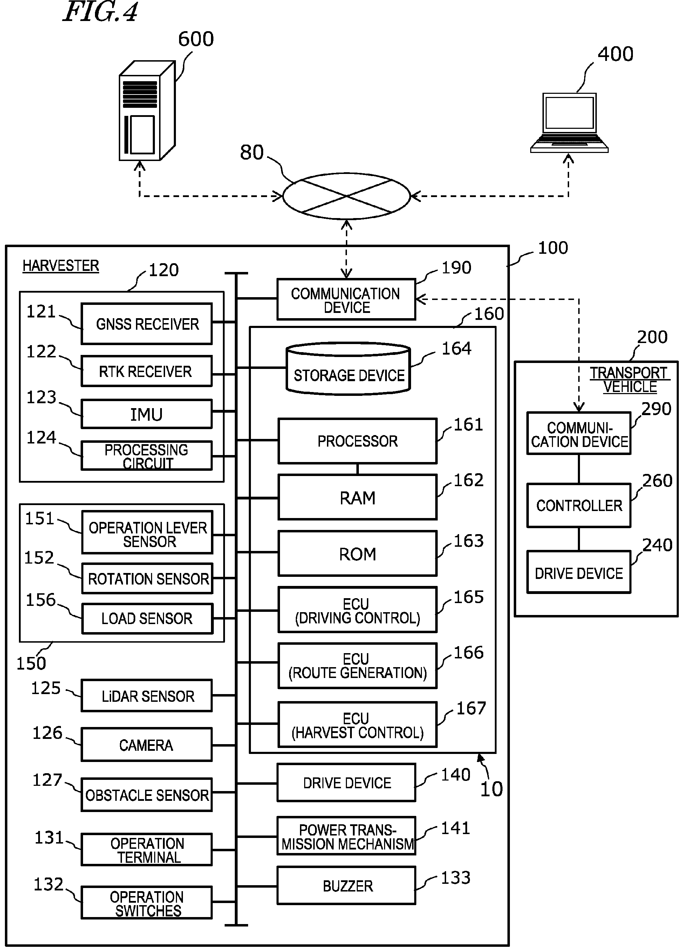

FIG. **4** is a block diagram showing an example configuration of the harvester **100.** The harvester **100** can communicate with the terminal device **400** and the management device **600** via the network **80.** The harvester **100** and the transport vehicle **200** may communicate with each other via the network **80,** or may communicate directly with each other without the network **80.**

The harvester **100** illustrated in FIG. **4** includes the GNSS unit **120,** the LiDAR sensors **125,** the cameras **126,** the obstacle sensors **127,** an operation terminal **131,** operation switches **132,** a buzzer **133,** a drive device **140,** a power transmission mechanism **141,** sensors **150,** a controller **160,** and a communication device **190.** These elements are connected to each other so that the elements can communicate with each other via a bus.

The GNSS unit **120** includes a GNSS receiver **121,** an RTK receiver **122,** an inertial measurement unit (IMU) **123,** and a processing circuit **124.** The sensors **150** detect various states of the harvester **100.** The sensors **150** include an operation lever sensor **151,** a rotation sensor **152,** and a load sensor **156.** The controller **160** includes a processor **161,** a RAM (Random Access Memory) **162,** a ROM (Read Only Memory) **163,** a storage device **164,** and a plurality of electronic control units (ECUs) **165** to **167.** The transport vehicle **200** includes a drive device **240,** a controller **260,** and a communication device **290.** FIG. **4** shows the elements that are relatively highly relevant to the automated driving operation by the harvester **100,** and the other elements are not shown in the figure.

The GNSS receiver **121** provided in the GNSS unit **120** receives satellite signals transmitted from a plurality of GNSS satellites and generates GNSS data based on the satellite signals. The GNSS data is generated in a predetermined format, such as the NMEA-0183 format. The GNSS data may include, for example, values indicating the identification numbers, elevation angles, azimuth angles, and reception strength of satellites from which satellite signals are received.

The GNSS unit **120** illustrated in FIG. **4** performs positioning of the harvester **100** using RTK (Real Time Kinematic) -GNSS. With the positioning using RTK-GNSS, correction signals transmitted from a reference station are used, in addition to the satellite signals transmitted from a plurality of GNSS satellites. The reference station may be installed near the field where the harvester **100** performs a tasked travel (e.g., within 10 km of the harvester **100**). The reference station generates a correction signal in RTCM format, for example, based on satellite signals received from a plurality of GNSS satellites, and transmits the correction signal to the GNSS unit **120.** The RTK receiver **122** includes an antenna and a modem, and receives the correction signal transmitted from the reference station. The processing circuit **124** of the GNSS unit **120** corrects the positioning results by the GNSS receiver **121** based on the correction signal. Using RTK-GNSS, it is possible to perform positioning with a precision of a few centimeters, for example. Position data including information of latitude, longitude and altitude is acquired through high-precision positioning using RTK-GNSS. The GNSS unit **120** calculates the position of the harvester **100** at a frequency of about 1 to 10 times per second, for example.

Note that the positioning method is not limited to RTK-GNSS, and any positioning method may be used (such as interferometric positioning or relative positioning) as long as position data of the required precision is obtained. For example, positioning using VRS (Virtual Reference Station) or DGPS (Differential Global Positioning System) may be used. If position data of the required precision can be obtained without using the correction signal transmitted from the reference station, the position data may be generated without using the correction signal. In that case, the GNSS unit **120** may not include the RTK receiver **122.**

Even when RTK-GNSS is used, in places where correction signals from the reference station cannot be obtained (e.g., on roads far from the field), the position of the harvester **100** is estimated by other methods, not by signals from the RTK receiver **122.** For example, the position of the harvester **100** can be estimated by matching data output from the LiDAR sensor **125** and/or the camera **126** with a high-precision environment map.

The IMU **123** may include a 3-axis accelerometer or a 3-axis gyroscope. The IMU **123** may include a compass sensor such as a 3-axis geomagnetic sensor. The IMU **123** functions as a motion sensor and can output signals indicating various quantities such as acceleration, speed, displacement, and attitude of the harvester **100.** The processing circuit **124** can estimate the position and orientation of the harvester **100** with higher precision based on the signals output from the IMU **123** in addition to the satellite signals and the correction signals. The signals output from the IMU **123** can be used to correct or complement the position calculated based on the satellite signals and the correction signals. The IMU **123** outputs signals at a higher frequency than the GNSS receiver **121.** Using the signals output at a higher frequency, the processing circuit **124** can measure the position and orientation of the harvester **100** at a higher frequency (e.g., 10 Hz or more). Instead of the IMU **123,** a 3-axis accelerometer and a 3-axis gyroscope may be provided separately. The IMU **123** may be provided as a device separate from the GNSS unit **120.**

The camera **126** is an imaging device that captures images of the environment around the harvester **100.** The camera **126** includes an image sensor, such as a CCD (Charge Coupled Device) or CMOS (Complementary Metal Oxide Semiconductor). The camera **126** may also include an optical system including one or more lenses and a signal processing circuit. The camera **126** captures images of the environment around the harvester **100** while the harvester **100** is traveling, and generates image (e.g., video) data. The camera **126** may capture a video at a frame rate of 3 frames/sec (fps: frames per second) or more, for example. The images generated by the camera **126** can be used, for example, for a person monitoring remotely to check the environment around the harvester **100** using the terminal device **400.** The images generated by the camera **126** may be used for positioning or obstacle detection. A plurality of cameras **126** may be provided at different locations of the harvester **100,** or a single camera may be provided. A visible light camera that generates visible light images and an infrared camera that generates infrared images may be provided separately. Both a visible light camera and an infrared camera may be provided as cameras that generate images for monitoring. The infrared camera may also be used to detect obstacles at night.

The obstacle sensor **127** detects objects that are present around the harvester **100.** The obstacle sensor **127** may include, for example, a laser scanner or an ultrasonic sonar. The obstacle sensor **127** outputs a signal indicating that an obstacle exists when an object exists within a predetermined distance from the obstacle sensor **127.** A plurality of obstacle sensors **127** may be arranged at different locations of the harvester **100.** For example, a plurality of laser scanners and a plurality of ultrasonic sonars may be arranged at different locations of the harvester **100.** By including a plurality of obstacle sensors **127,** it is possible to reduce blind spots in monitoring obstacles around the harvester **100.**

The operation lever sensor **151** detects an operation of an operation lever by a user in the cabin **110.** The output signal of the operation lever sensor **151** is used for the driving control by the controller **160.** The rotation sensor **152** measures the rotation speed, i.e., the number of rotations per unit time, of the axle of the travel device **102.** The rotation sensor **152** may be a sensor that uses a magnetoresistive element (MR), a Hall element, or an electromagnetic pickup, for example. The rotation sensor **152** outputs a value indicating the number of rotations per minute (unit: rpm) of the axle, for example. The rotation sensor **152** is used to measure the speed of the harvester **100,** for example.

The load sensor **156** is provided at the bottom of the tank **106** and detects the weight of the harvested crop in the tank **106.** By detecting the weight of the harvested crop in the tank **106,** the controller **160** can recognize the storage status of the harvested crop in the tank **106.** A yield sensor and a taste sensor may be provided inside or around the tank **106.** The taste sensor outputs data such as the moisture content and protein content of the harvested crop as quality data.

The buzzer **133** is a sound output device that emits warning sounds to notify of abnormalities. The buzzer **133,** for example, emits a warning sound when an obstacle is detected during automated driving. The buzzer **220** is controlled by the controller **160.**

The drive device **140** includes various devices necessary for driving the harvester **100,** such as the prime mover **111** and the transmission **112.** The prime mover **111** may include an internal combustion engine, such as a diesel engine. The drive device **140** may include an electric motor for traction instead of or in addition to the internal combustion engine.

The power transmission device **141** transmits the power generated by the prime mover **111** to various devices that perform the harvesting operation. The devices that perform the harvesting operation include the cutting device **103,** the conveyer device **104,** the threshing device **105,** the discharge device **107,** the straw disposal device **108,** the reel **109,** etc. The harvester **100** may include a power source (e.g., an electric motor) that supplies power to at least one of these devices that perform the harvesting operation, separate from the prime mover **111.**

The processor **161** may be a semiconductor integrated circuit including a central processing unit (CPU), for example. The processor **161** may be implemented by a microprocessor or a microcontroller. Alternatively, the processor **161** may be implemented by an FPGA (Field Programmable Gate Array) with a CPU, a GPU (Graphics Processing Unit), an ASIC (Application Specific Integrated Circuit), an ASSP (Application Specific Standard Product), or a combination of two or more circuits selected from among these circuits. The processor **161** sequentially executes a computer program stored in the ROM **163** that describes a group of instructions for executing at least one process, thereby realizing the desired process.

The ROM **163** is, for example, a writable memory (e.g., a PROM), a rewritable memory (e.g., a flash memory), or a read-only memory. The ROM **163** stores a program that controls the operation of the processor **161.** The ROM **163** does not need to be a single storage medium, and may be a collection of storage mediums. Some of the collection of storage mediums may be removable memory.

The RAM **162** provides a work area for temporarily expanding the control program stored in the ROM **163** at boot. The RAM **162** does not need to be a single storage medium, and may be a collection of storage mediums.

The storage device **164** includes one or more storage medium such as a flash memory or a magnetic disk. The storage device **164** stores various data generated by the GNSS unit **120,** the LiDAR sensor **125,** the camera **126,** the obstacle sensor **127,** the sensors **150,** and the controller **160.** The data stored in the storage device **164** may include map data (environment map) of the environment in which the harvester **100** travels, and data of a target route for automated driving. The environment map includes information on the plurality of fields in which the harvester **100** performs agricultural work and the roads around the fields. The environment map and the target route may be generated by the processor of the management device **600.** Note that the controller **160** may have the function of generating or editing the environment map and the target route. The controller **160** can edit the environment map and the target route acquired from the management device **600** in accordance with the environment in which the harvester **100** travels. The storage device **164** also stores data of the work plan received by the communication device **190** from the management device **600.**

The storage device **164** also stores computer programs that cause the processor **161** and the ECUs **165** to **167** to perform various operations to be described below. Such computer programs may be provided to the harvester **100** via a storage medium (e.g., a semiconductor memory or an optical disc) or an electrical communication line (e.g., the Internet). Such computer programs may be sold as commercial software.

The controller **160** includes a plurality of ECUs **165** to **167.** The ECU **165** controls the traveling speed and the turn operation of the harvester **100** by controlling the prime mover **111**, the transmission **112**, the travel device **102**, etc., included in the drive device **140.**

The ECU **165** performs calculation and control to achieve automated driving based on data output from the GNSS unit **120,** the camera **126,** the obstacle sensor **127,** the LiDAR sensor **125,** the sensors **150,** and the processor **161.** For example, the ECU **165** identifies the position of the harvester **100** based on data output from at least one of the GNSS unit **120,** the camera **126,** and the LiDAR sensor **125.** Inside the field, the ECU **165** may determine the position of the harvester **100** based only on data output from the GNSS unit **120.** The ECU **165** may estimate or correct the position of the harvester **100** based on data acquired by the camera **126** and/or the LiDAR sensor **125.** Using the data acquired by the camera **126** and/or the LiDAR sensor **125,** it is possible to further improve the positioning precision. For example, the ECU **165** may estimate the position of the harvester **100** by matching data output from the LiDAR sensor **125** and/or the camera **126** with an environment map. During automated driving, the ECU **165** performs necessary calculations to enable the harvester **100** to travel along the target route based on the estimated position of the harvester **100.**

The ECU **166** may determine the destination of the harvester **100** based on the work plan stored in the storage device **164,** and determine the target route from the travel starting point to the destination point of the harvester **100.** The ECU **166** may perform the process of detecting objects located around the harvester **100** based on data output from the camera **126,** the obstacle sensor **127,** and the LiDAR sensor **125.**

The ECU **167** controls the operation of the power transmission mechanism **141,** etc., so as to cause various devices for performing the harvesting operation described above to execute desired operations.

The controller **160** achieves automated driving and crop harvesting operation by the operation of these ECUs. During automated driving, the controller **160** controls the drive device **140** based on the measured or estimated position of the harvester **100** and the target route. Thus, the controller **160** can cause the harvester **100** to travel along the target route.

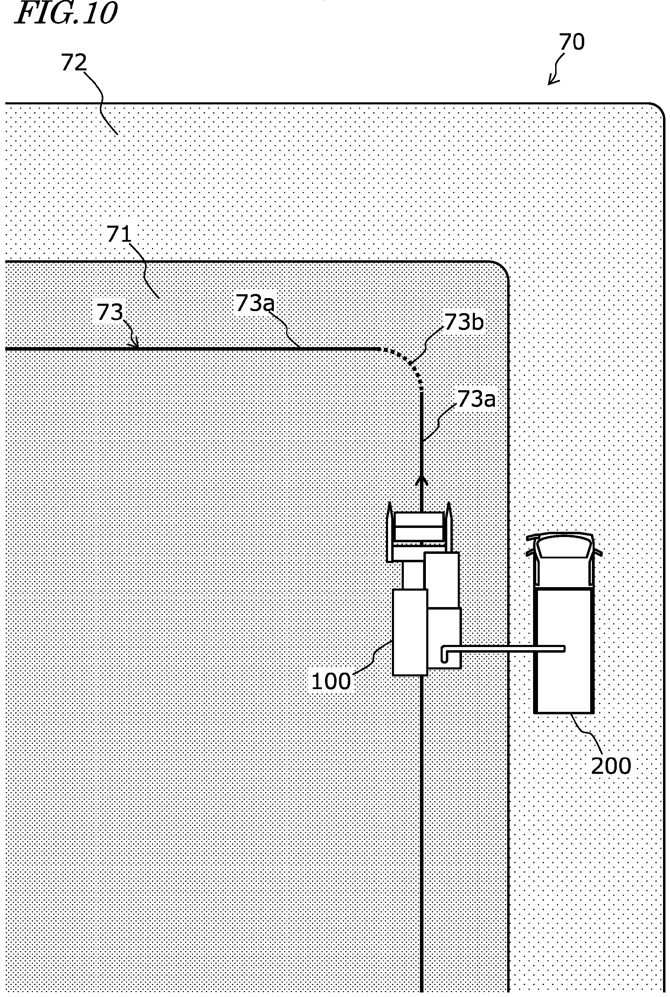

The plurality of ECUs included in the controller **160** can communicate with each other according to a vehicle bus standard, such as CAN (Controller Area Network), for example. Instead of CAN, a faster communication method, such as in-vehicle Ethernet (registered trademark), may be used. In FIG. **10****,** the ECUs **165** to **167** are each shown as an individual block, but their functions may each be implemented by a plurality of ECUs. An in-vehicle computer that integrates at least some of the functions of the ECUs **165** to **167** may be provided. The controller **180** may include ECUs other than the ECUs **165** to **167,** and any number of ECUs may be provided according to the functions. Each ECU includes a processing circuit that includes one or more processors. The processor **161** may be integrated with any of the ECUs included in the controller **160.**

The communication device **190** is a device that includes a circuit for communicating with the transport vehicle **200,** the terminal device **400,** and the management device **600.** The communication device **190** includes a circuit that wirelessly communicates with the communication device **290** of the transport vehicle **200.** Thus, it is possible to cause the transport vehicle **200** to execute desired operations, and acquire information from the transport vehicle **200.** The communication device **190** may further include an antenna and a communication circuit for exchanging signals via the network **80** with the communication devices of the terminal device **400** and the management device **600.** The network **80** may include a cellular mobile communication network such as 3G, 4G, or 5G, and the Internet, for example. The communication device **190** may include the function of communicating with a mobile terminal used by a monitoring person who is in the vicinity of the harvester **100.** Communication with such a mobile terminal may be in accordance with any wireless communication standard, such as Wi-Fi (registered trademark), cellular mobile communication such as 3G, 4G, or 5G, or Bluetooth (registered trademark).

The operation terminal **131** is a terminal for a user to perform operations related to the travel of the harvester **100** and the action of the transport vehicle **200,** and is also referred to as a virtual terminal (VT). The operation terminal **131** may include a display device such as a touch screen and/or one or more buttons. The display device may be a display such as an LCD or an organic light-emitting diode (OLED), for example. By operating the operation terminal **131,** a user can perform various operations, such as switching the automated driving mode on and off, recording or editing an environment map, and setting a target route. At least some of these operations may also be realized by operating operation switches **132.** The operation terminal **131** may be configured to be detachable from the harvester **100.** A user located away from the harvester **100** may control the operation of the harvester **100** by operating the detached operation terminal **131.** A user may control the operation of the harvester **100** by operating a computer, such as the terminal device **400,** on which the necessary application software is installed, instead of the operation terminal **131.**

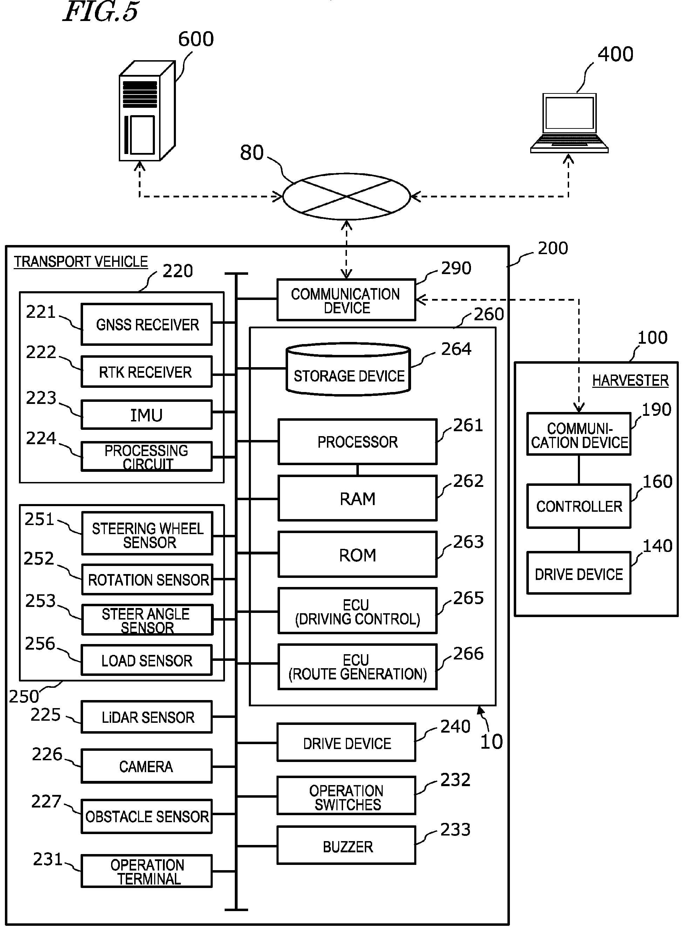

FIG. **5** is a block diagram showing an example configuration of the transport vehicle **200.** The transport vehicle **200** can communicate with the terminal device **400** and the management device **600** via the network **80.**

The transport vehicle **200** illustrated in FIG. **5** includes the GNSS unit **220,** the LiDAR sensor **225,** the camera **226,** the obstacle sensor **227,** an operation terminal **231,** operation switches **232,** a buzzer **233,** the drive device **240,** sensors **250,** the controller **260,** and the communication device **290.** These elements are connected to each other so that the elements can communicate with each other via a bus.

The GNSS unit **220** includes a GNSS receiver **221,** an RTK receiver **222,** an IMU **223,** and a processing circuit **224.** The sensors **250** detect various states of the transport vehicle **200.** The sensors **250** include a steering wheel sensor **251,** a rotation sensor **252,** a steer angle sensor **253,** and a load sensor **256.** The controller **260** includes a processor **261,** a RAM **262,** a ROM **263,** a storage device **264,** electronic control units (ECU) **265** and **266.** FIG. **5** shows elements that are relatively highly relevant to the automated driving operation by the transport vehicle **200,** and the other elements are not shown in the figure.

The GNSS receiver **221** provided in the GNSS unit **220** receives satellite signals transmitted from a plurality of GNSS satellites and generates GNSS data based on the satellite signals.

The GNSS unit **220** illustrated in FIG. **5** performs positioning of the transport vehicle **200** using RTK-GNSS. Using RTK-GNSS, it is possible to perform positioning with a precision of a few centimeters, for example. Position data including latitude, longitude and altitude is acquired through high-precision positioning using RTK-GNSS. The GNSS unit **220** calculates the position of the transport vehicle **200** at a frequency of about 1 to 10 times per second, for example.

Note that the positioning method is not limited to RTK-GNSS, and any positioning method may be used (such as interferometric positioning or relative positioning) as long as position data of the required precision is obtained. For example, positioning using VRS or DGPS may be used. If position data of the required precision can be obtained without using the correction signal transmitted from the reference station, the position data may be generated without using the correction signal. In that case, the GNSS unit **220** may not include the RTK receiver **222.**

Even when RTK-GNSS is used, in places where correction signals from the reference station cannot be obtained (e.g., on roads far from the field), the position of the transport vehicle **200** is estimated by other methods, not by signals from the RTK receiver **222.** For example, the position of the transport vehicle **200** can be estimated by matching data output from the LiDAR sensor **225** and/or the camera **226** with a high-precision environment map.

The IMU **223** may include a 3-axis accelerometer and a 3-axis gyroscope. The IMU **223** may include a compass sensor such as a 3-axis geomagnetic sensor. The IMU **223** functions as a motion sensor and can output signals indicating various quantities such as acceleration, speed, displacement, and attitude of the transport vehicle **200.** The processing circuit **224** can estimate the position and orientation of the transport vehicle **200** with higher precision based on the signals output from the IMU **223** in addition to the satellite signals and the correction signals. The signals output from the IMU **223** can be used to correct or complement the position calculated based on the satellite signals and the correction signal. The IMU **223** outputs signals at a higher frequency than the GNSS receiver **221.** Using the signals output at a higher frequency, the processing circuit **224** can measure the position and orientation of the transport vehicle **200** at a higher frequency (e.g., 10 Hz or more). Instead of the IMU **223,** a 3-axis accelerometer and a 3-axis gyroscope may be provided separately. The IMU **223** may be provided as a device separate from the GNSS unit **220.**

The camera **226** is an imaging device that captures images of the environment around the transport vehicle **200.** The camera **226** includes an image sensor, such as a CCD or CMOS. The camera **226** may also include an optical system including one or more lenses and a signal processing circuit. The camera **226** captures images of the environment around the transport vehicle **200** while the transport vehicle **200** is traveling, and generates image (e.g., video) data. The camera **226** may capture a video at a frame rate of 3 (fps) or more. The images generated by the camera **226** can be used, for example, for a person monitoring remotely to check the environment around the transport vehicle **200** using the terminal device **400.** The images generated by the camera **226** may be used for positioning or obstacle detection. A plurality of cameras **226** may be provided at different locations of the transport vehicle **200,** or a single camera may be provided. A visible light camera that generates visible light images and an infrared camera that generates infrared images may be provided separately. Both a visible light camera and an infrared camera may be provided as cameras that generate images for monitoring. The infrared camera may also be used to detect obstacles at night.

The obstacle sensor **227** detects objects that are present around the transport vehicle **200.** The obstacle sensor **227** may include, for example, a laser scanner or an ultrasonic sonar. A plurality of obstacle sensors **227** may be provided at different locations of the transport vehicle **200.** For example, a plurality of laser scanners and a plurality of ultrasonic sonars may be arranged at different locations of the transport vehicle **200.** By including a plurality of obstacle sensors **227,** it is possible to reduce blind spots in monitoring obstacles around the transport vehicle **200.**

The steering wheel sensor **251** measures the rotation angle of the steering wheel of the transport vehicle **200.** The steer angle sensor **253** measures the steer angle of the front wheels **202F,** which are steering wheels. The measurement values taken by the steering wheel sensor **251** and the steer angle sensor **253** are used for steering control by the controller **260.**

The rotation sensor **252** measures the rotational speed, i.e., the number of rotations per unit time, of the axle connected to the wheels **202.** The rotation sensor **252** may be a sensor that uses a magnetoresistive element (MR), a Hall element, or an electromagnetic pickup, for example. The rotation sensor **252** outputs a value indicating the number of rotations per minute (unit: rpm) of the axle, for example. The rotation sensor **252** is used to measure the speed of the transport vehicle **200.**

The load sensor **256** is provided at the bottom of the load bed **203,** which functions as a container for storing the harvested crop, and detects the weight of the harvested crop in the load bed **203.** By detecting the weight of the harvested crop in the load bed **203,** the controller **260** can recognize the storage status of the harvested crop in the load bed **203.**

The buzzer **233** is a sound output device that emits warning sounds to notify of abnormalities. For example, the buzzer **133** emits a warning sound when an obstacle is detected during automated driving. The buzzer **233** is controlled by the controller **260.**

The drive device **240** includes various devices necessary for driving the transport vehicle **200,** such as the prime mover **211** and the transmission **212.** The prime mover **211** may include an internal combustion engine, such as a diesel engine. The drive device **240** may include an electric motor for traction instead of or in addition to the internal combustion engine.

The processor **261** may be a semiconductor integrated circuit including a central processing unit (CPU), for example. The ROM **263** is, for example, a writable memory (e.g., a PROM), a rewritable memory (e.g., a flash memory), or a read-only memory. The RAM **262** provides a work area for temporarily expanding the control program stored in the ROM **263** at boot. The detailed configuration of the processor **261,** the RAM **262,** and the ROM **263** is similar to the processor **161,** the RAM **162,** and the ROM **163,** and the detailed description thereof will be omitted herein.

The storage device **264** includes one or more storage medium such as a flash memory or a magnetic disk. The storage device **264** stores various data generated by the GNSS unit **220,** the LiDAR sensor **225,** the camera **226,** the obstacle sensor **227,** the sensors **250,** and the controller **260.** The data stored in the storage device **264** may include map data (environment map) of the environment in which the transport vehicle **200** travels, and data of a target route for automated driving. The environment map includes information on the plurality of fields in which the transport vehicle **200** performs agricultural work and the roads around the fields. The environment map and the target route may be generated by the processor of the management device **600.** Note that the controller **160** may have the function of generating or editing the environment map and the target route. The controller **260** can edit the environment map and the target route acquired from the management device **600** in accordance with the environment in which the transport vehicle **200** travels. The storage device **264** also stores data of the work plan received by the communication device **290** from the management device **600.**

The storage device **264** also stores computer programs that cause the processor **261** and the ECUs **265, 266** to perform various operations to be described below. Such computer programs may be provided to the transport vehicle **200** via a storage medium (e.g., a semiconductor memory or an optical disc) or an electrical communication line (e.g., the Internet). Such computer programs may be sold as commercial software.

The controller **260** includes the ECUs **265, 266.** The ECU **265** controls the traveling speed and the turn operation of the transport vehicle **200** by controlling the prime mover **211,** the transmission **212,** the steering device, etc., included in the drive device **240.**

The ECU **265** performs calculation and control to achieve automated driving based on data output from the GNSS unit **220,** the camera **226,** the obstacle sensor **227,** the LiDAR sensor **225,** the sensors **250,** and the processor **261.** For example, the ECU **265** identifies the position of the transport vehicle **200** based on data output from at least one of the GNSS unit **220,** the camera **226,** and the LiDAR sensor **225.** Inside the field, the ECU **265** may determine the position of the transport vehicle **200** based only on data output from the GNSS unit **220.** The ECU **265** may estimate or correct the position of the transport vehicle **200** based on data acquired by the camera **226** and/or the LiDAR sensor **225.** Using the data acquired by the camera **226** and/or the LiDAR sensor **225,** it is possible to further improve the positioning precision. For example, the ECU **265** may estimate the position of the transport vehicle **200** by matching data output from the LiDAR sensor **225** and/or the camera **226** with an environment map. During automated driving, the ECU **265** performs necessary calculations to enable the transport vehicle **200** to travel along the target route based on the estimated position of the transport vehicle **200.**

The ECU **266** may determine the destination of the transport vehicle **200** based on the work plan stored in the storage device **264,** and determine the target route from the travel starting point to the destination point of the transport vehicle **200.** The ECU **266** may perform the process of detecting objects located around the transport vehicle **200** based on data output from the LiDAR sensor **225,** the camera **226,** and the obstacle sensor **227.**

The controller **260** achieves automated driving by the operation of these ECUs **265, 266.** During automated driving, the controller **260** controls the drive device **240** based on the measured or estimated position of the transport vehicle **200** and the target route. Thus, the controller **260** can cause the transport vehicle **200** to travel along the target route.

The plurality of ECUs included in the controller **260** can communicate with each other according to a vehicle bus standard, such as CAN, for example. Instead of CAN, a faster communication method, such as in-vehicle Ethernet (registered trademark), may be used. In FIG. **5****,** the ECUs **265, 266** are each shown as an individual block, but their functions may each be implemented by a plurality of ECUs. An in-vehicle computer that integrates at least some of the functions of the ECUs **265, 266** may be provided. The controller **260** may include ECUs other than the ECUs **265, 266,** and any number of ECUs may be provided according to the functions. Each ECU includes a processing circuit that includes one or more processors. The processor **261** may be integrated with any of the ECUs included in the controller **260.**

The communication device **290** is a device that includes a circuit for communicating with the harvester **100,** the terminal device **400,** and the management device **600.** The communication device **290** includes a circuit that wirelessly communicates with the communication device **190** of the harvester **100.** Thus, it is possible to cause the harvester **100** to execute desired operations, and acquire information from the harvester **100.** The communication device **290** may further include an antenna and a communication circuit for exchanging signals via the network **80** with the communication devices of the terminal device **400** and the management device **600.** The communication device **290** may include the function of communicating with a mobile terminal used by a monitoring person who is in the vicinity of the transport vehicle **200.** Communication with such a mobile terminal may be in accordance with any wireless communication standard, such as Wi-Fi (registered trademark), cellular mobile communication such as 3G, 4G, or 5G, or Bluetooth (registered trademark).

The operation terminal **231** is a terminal for a user to perform operations related to the travel of the transport vehicle **200,** and is also referred to as a virtual terminal (VT). The operation terminal **231** may include a display device such as a touch screen and/or one or more buttons. The display device may be a display such as an LCD or an OLED, for example. By operating the operation terminal **231,** a user can perform various operations, such as switching the automated driving mode on and off, recording or editing an environment map, and setting a target route. At least some of these operations may also be realized by operating operation switches **232.** The operation terminal **231** may be configured to be detachable from the transport vehicle **200.** A user located away from the transport vehicle **200** may control the operation of the transport vehicle **200** by operating the detached operation terminal **231.** A user may control the operation of the transport vehicle **200** by operating a computer, such as the terminal device **400,** on which the necessary application software is installed, instead of the operation terminal **231.**

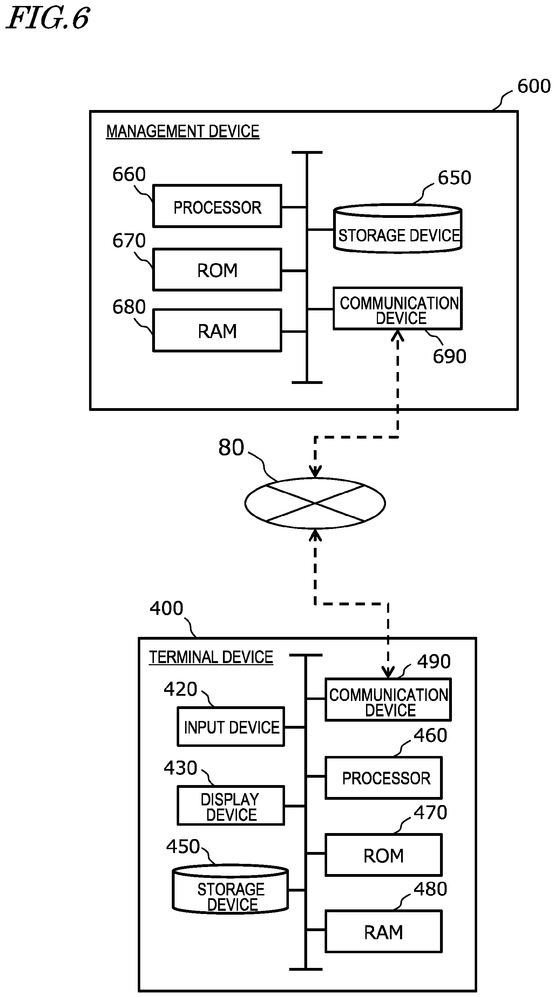

Next, referring to FIG. **6****,** the configuration of the management device **600** and the terminal device **400** will be described. FIG. **6** is a block diagram illustrating an example hardware configuration of the management device **600** and the terminal device **400.**

The management device **600** includes the storage device **650,** the processor **660,** the ROM **670,** the RAM **680,** and the communication device **690.** These elements are connected to each other so that the elements can communicate with each other via a bus. The management device **600** can function as a cloud server that manages the schedule of agricultural work performed in the field by the harvester **100** and the transport vehicle **200** and supports agriculture by using the data the management device **600** manages. A user can use the terminal device **400** to input the information needed to create a work plan and upload that information to the management device **600** via the network **80.** The management device **600** can create a schedule for agricultural work, i.e., a work plan, based on that information. The management device **600** can also generate or edit an environment map. The environment map may be delivered from a computer external to the management device **600.**

The communication device **690** is a communication module for communicating with the harvester **100,** the transport vehicle **200,** and the terminal device **400** via the network **80.** The communication device **690** can perform wired communication in conformity with communication standards such as IEEE1394 (registered trademark) or Ethernet (registered trademark), for example. The communication device **690** may perform wireless communication in conformity with the Bluetooth (registered trademark) standard or the Wi-Fi standard, or cellular mobile communication such as 3G, 4G, or 5G.

The processor **660** may be a semiconductor integrated circuit including a central processing unit (CPU), for example. The ROM **670** is, for example, a writable memory (e.g., a PROM), a rewritable memory (e.g., a flash memory), or a read-only memory. The RAM **680** provides a work area for temporarily expanding the control program stored in the ROM **670** at boot. The detailed configuration of the processor **660,** the ROM **670,** and the RAM **680** is similar to the processor **161,** the ROM **163,** and the RAM **162,** and the detailed description thereof will be omitted herein.

The storage device **650** functions primarily as a database storage. The storage device **650** may be, for example, a magnetic storage device or a semiconductor storage device. The storage device **650** may be a device independent of the management device **600.** For example, the storage device **650** may be a storage device connected to the management device **600** via the network **80,** such as a cloud storage.

The terminal device **400** includes an input device **420,** a display device **430,** a storage device **450,** a processor **460,** a ROM **470,** a RAM **480,** and a communication device **490.** These elements are connected to each other so that the elements can communicate with each other via a bus. The input device **420** is a device that converts instructions from the user into data and inputs the data into the computer. The input device **420** may be, for example, a keyboard, a mouse, or a touch panel. The display device **430** may be, for example, a liquid crystal display or an organic EL display. The processor **460,** the ROM **470,** the RAM **480,** the storage device **450,** and the communication device **490** are as described above for the example hardware configuration of the harvester **100,** the transport vehicle **200,** and the management device **600,** and the description thereof will be omitted.

### [2. Operation]

Next, the harvesting operation, in which the crop in the field is harvested using the harvester **100** and the transport vehicle **200** will be described. A control system **10** that controls such harvesting operations may be realized by the controller **160** of the harvester **100** and the controller **260** of the transport vehicle **200.** The agricultural management system **1** may function as the control system **10** that controls such harvesting operations.

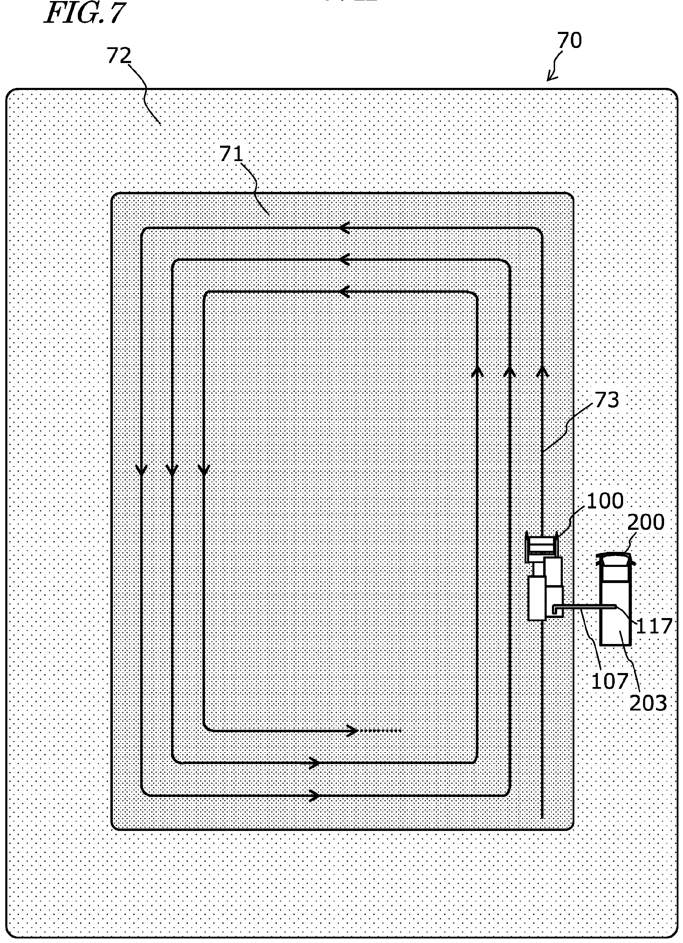

FIG. **7** shows the harvesting operation in which the harvester **100** and the transport vehicle **200** are used to harvest the crop in the field **70.**

The harvester **100** of the present embodiment harvests crop while traveling through the field **70** by automated driving. In the field **70,** the harvester **100** executes the operation of harvesting crop while traveling along a pre-set target route **73.** In the field **70,** the positioning of the harvester **100** is performed mainly based on data output from the GNSS unit **120.** In addition to the positioning data output from the GNSS unit **120,** the position of the harvester **100** may be estimated based on data output from the LiDAR sensor **125** and/or the camera **126.**

In the example shown in FIG. **7****,** the field **70** includes a work area **71** in which the harvester **100** harvests the crop and a headland **72** located around the outer edge of the field **70.** Which areas of the field **70** correspond to the work area **71** and the headland **72** may be set in advance by the user. The harvester **100** automatically travels along the target route **73,** as shown in FIG. **7****,** from the start point of work to the end point of work. Note that the target route **73** shown in FIG. **7** is merely an example, and the target route **73** can be determined in any way. The target route **73** may be created based on user operations or may be created automatically. For example, the target route **73** may be created so as to cover the entire work area **71** inside the field **70.**

In the present embodiment, the transport vehicle **200** is caused to travel alongside the harvester **100** that harvests crop while traveling inside the field **70** by automated driving. The transport vehicle **200** receives the harvested crop discharged from the harvester **100** while traveling alongside the harvester **100** by automated driving, and stores the harvested crop in the load bed **203.**

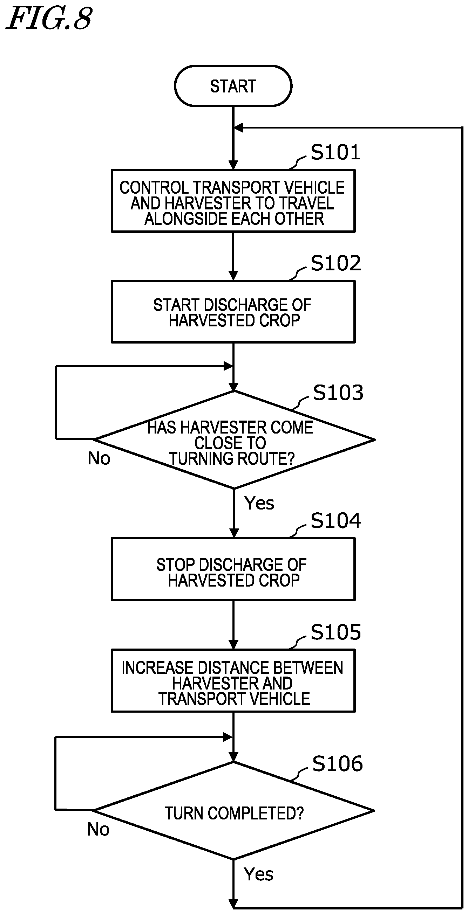

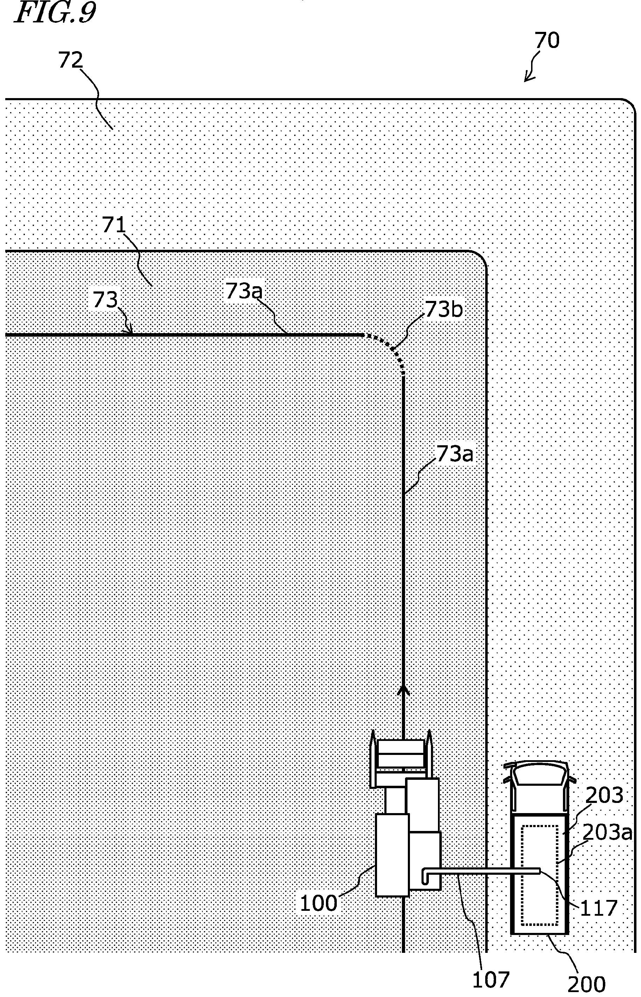

FIG. **8** is a flow chart showing an example control for the harvesting operation of harvesting the crop in field **70** using the harvester **100** and the transport vehicle **200.** FIG. **9** is a diagram showing an example of the harvester **100** that automatically travels along the target route **73** within the field **70,** and the transport vehicle **200** that travels alongside the harvester **100.**

The harvester **100** harvests crop while traveling along the target route **73** by automated driving. The processor **161** of the harvester **100** (FIG. **4****)** causes the ECU **165** to control the harvester **100** to travel along the target route **73** by automated driving, and causes the ECU **167** to control the crop harvesting operation. The ECU **165** controls the operation of the drive device **140** to cause the harvester **100** to travel by automated driving. The ECU **167** controls the operation of the power transmission device **141** to cause various devices that perform the crop harvesting operation to perform the desired operation. The cutting device **103** cuts the crop in the field **70.** The threshing device **105** threshes the cut crop. The tank **106** stores the harvested crop obtained by threshing the grain, etc. The straw disposal device **108** finely cuts, and discharges to the outside, the stalk portion, etc., after the harvest, such as grain, has been removed. The discharge device **107** discharges the harvested crop in the tank **106** while the harvester **100** and the transport vehicle **200** are traveling alongside each other.

The processor **261** of the transport vehicle **200** (FIG. **5****)** causes the ECU **265** to control the transport vehicle **200** to travel alongside the harvester **100** (step S101 of FIG. **8****).**

The harvester **100** and the transport vehicle **200** exchange data with each other via the communication devices **190** and **290.** The processor **161** of the harvester **100** transmits information on the geographic coordinates of the position of the harvester **100** acquired from the GNSS unit **120** and information on the direction of the harvester **100** to the transport vehicle **200** via the communication device **190.**

The processor **261** of the transport vehicle **200** calculates the geographic coordinates of a position adjacent to the side of the harvester **100** based on information of the geographic coordinates and orientation of the harvester **100,** and sets the position of the calculated geographic coordinates as the target position. In the examples shown in FIG. **7** and FIG. **9****,** the processor **261** calculates the geographic coordinates of a position adjacent to the right side of the harvester **100.** Since the position of the traveling harvester **100** changes, the target position is updated as necessary.

The processor **261** causes the ECU **265** to control the transport vehicle **200** to travel so as to reach the latest target position. Thus, the transport vehicle **200** can travel alongside the harvester **100.**

The discharge device **107** of the harvester **100** is rotatable, and in the example shown in FIG. **7** and FIG. **9****,** a discharge outlet **117** of the discharge device **107** is located on the right side of the harvester **100.**

When the position of a discharge outlet **117** is within a first range **203a,** in which the harvested crop discharged from the discharge outlet **117** can be received in the load bed **203,** the discharged harvested crop can be stored in the load bed **203** by discharging the harvested crop from the discharge device **107.**

The three-dimensional point cloud data output by the LiDAR sensor **225** of the transport vehicle **200** includes information on positions of a plurality of points and information (attribute information) such as the reception strength of the photo detector. The information on positions of a plurality of points is, for example, information on the direction of emission of the laser pulse corresponding to each point and the distance between the LiDAR sensor and each point. For example, the information on positions of a plurality of points is information on the coordinates of each point in the local coordinate system. The local coordinate system is a coordinate system that moves together with the transport vehicle **200,** and is also referred to as the sensor coordinate system. The coordinates of each point can be calculated from the direction of emission of the laser pulse corresponding to the point and the distance between the LiDAR sensor and the point.

The processor **261** controls the sensing device to sense the discharge outlet **117.** For example, the discharge outlet **117** is sensed using the LiDAR sensor **225.** The three-dimensional point cloud data output by the LiDAR sensor **225,** for example, includes information on the coordinates of each of the plurality of points in their respective local coordinate systems.

The processor **261** identifies point cloud data representing the discharge outlet **117** from the three-dimensional point cloud data output by the LiDAR sensor **225,** using an estimation model generated by machine learning, for example. The processor **261** acquires information on the coordinates of each of the plurality of points included in the point cloud data representing the discharge outlet **117.** The estimation model is stored in advance in the storage device **264.**

The coordinate values of each part of a first range **203a** in the load bed **203** in the local coordinate system are stored in advance in the storage device **264.** The processor **261** can determine whether the position of the discharge outlet **117** is within the first range **203a** by comparing the coordinate values of the discharge outlet **117** and the coordinate values of the first range **203a.**

Note that the positional relationship between the discharge outlet **117** and the first range **203a** may be determined using sensing data other than the sensing data of the LiDAR sensor **225.** For example, whether the position of the discharge outlet **117** is within the first range **203a** may be determined using sensing data output by the camera **226,** which has captured the image of the discharge outlet **117** and the load bed **203.**

If the position of the discharge outlet **117** is within the first range **203a,** the processor **261** transmits, to the harvester **100** via the communication device **290,** permission information indicating that the discharge of the harvested crop from the discharge device **107** is permitted.

Upon receiving the permission information, the processor **161** causes the ECU **167** to control the operation of discharging the harvested crop from the discharge device **107.** The ECU **167** controls the operation of the power transmission device **141** so as to cause the discharge device **107** to discharge the harvested crop in the tank **106** (step S102). The harvested crop discharged from the discharge outlet **117** goes into the load bed **203** and is stored in the load bed **203.**

When the position of the discharge outlet **117** is outside the first range **203a,** the processor **261** transmits a stop instruction to stop the discharge of the harvested crop from the discharge device **107** to the harvester **100** via the communication device **190.** Upon receiving the stop instruction, the processor **161** causes the ECU **167** to execute a control to stop the discharge of the harvested crop from the discharge device **107.** When the position of the discharge outlet **117** is again within the first range **203a,** the processor **261** transmits the permission information to the harvester **100,** and the discharge of the harvested crop is resumed.

FIG. **10** is a diagram showing how the harvester **100** and the transport vehicle **200** shown in FIG. **9** having moved forward while traveling alongside each other.

As shown in FIG. **9** and FIG. **10****,** the target route **73** includes main routes **73a** that include straight routes and a turning route **73b** that connects together a main route **73a** and another main route **73a.** The main route **73a** is a straight route, but the main route **73a** may include a curved portion. The direction of travel of the harvester **100** is changed by passing through the turning route **73b.**

The processor **161** determines whether the position of the harvester **100** traveling along the main route **73a** has come close to the turning route **73b,** based on the information of geographic coordinates acquired from the GNSS unit **120** and the information of geographic coordinates included in the information of the target route **73** (step S103). The processor **161** determines, for example, whether the distance between the front end of the harvester **100** and the start position of the turning route **73b** is less than or equal to a predetermined distance. The predetermined distance is, for example, 1 to 5 m, but is not limited to that value. The information on the target route **73** includes information on the geographic coordinates of the start position and the end position of each turning route **73b.** The positional relationship between the reference position of the harvester **100** and the front end and the rear end of the harvester **100** is stored in advance in the storage device **164.** The reference position in the local coordinate system can be set to any position of the harvester **100.** The reference position is, for example, the position at which the GNSS unit **220** is provided. The coordinate values of the reference position are stored in advance in the storage device **164.** The processor **161** can calculate the geographic coordinates of the front end and the rear end of the harvester **100** from such a positional relationship and information on the geographic coordinates acquired from the GNSS unit **120.**

If it is determined that the distance between the front end of the harvester **100** and the start position of the turning route **73b** is greater than a predetermined distance, the processor **161** continues the control to discharge the harvested crop from the discharge device **107.** If it is determined that the distance between the front end of the harvester **100** and the start position of the turning route **73b** is less than or equal to a predetermined distance, the processor **161** causes the ECU **167** to execute a control to stop the discharge of the harvested crop from the discharge device **107.** Thus, the discharge of the harvested crop from the discharge device **107** is stopped (step S104).

The processor **161** transmits stop information, which indicates that the discharge of the harvested crop from the discharge device **107** has been stopped, to the transport vehicle **200** via the communication device **190.** In parallel, the processor **161** transmits, to the transport vehicle **200** via the communication device **190,** course-of-travel information indicating that the harvester **100** is now entering the turning route **73b.** Upon receiving the stop information and the course-of-travel information, the processor **261** causes the ECU **265** to execute a control to cause the transport vehicle **200** to move away from the harvester **100** (step S105).

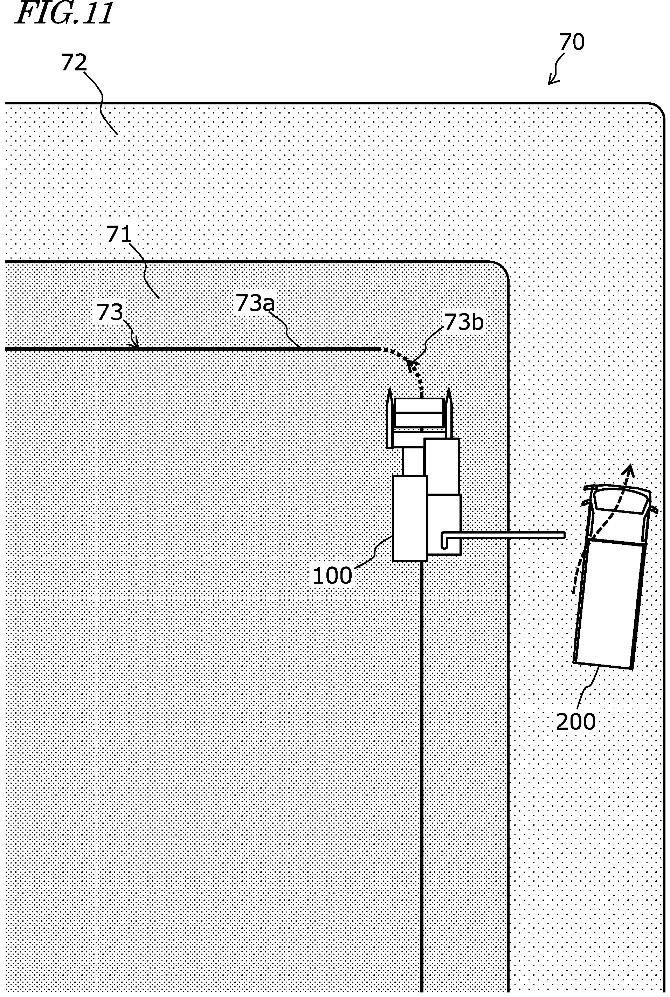

FIG. **11** is a diagram showing how the transport vehicle **200,** having traveled alongside the harvester **100,** moves away from the harvester **100.** The transport vehicle **200,** having been traveling alongside the right side of the harvester **100,** can move away from the harvester **100** by taking a course of travel going away to the right of the harvester **100** and/or by making the traveling speed of the transport vehicle **200** different from that of the harvester **100.**

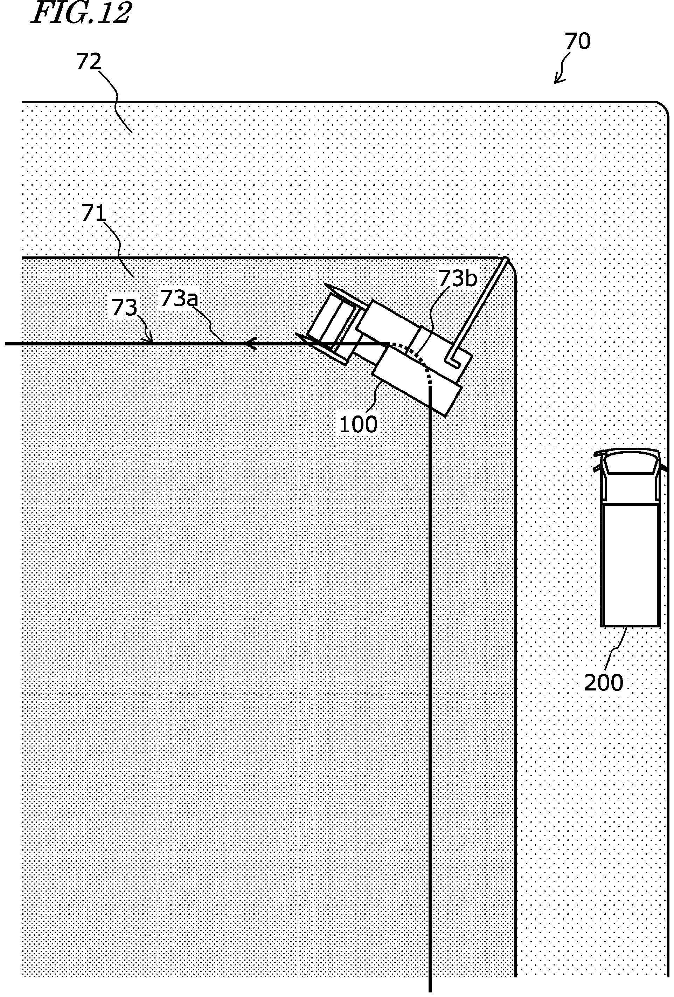

FIG. **12** is a diagram showing the harvester **100** turning along the turning route **73b.** The processor **161** causes the ECU **167** to execute a control to stop harvesting the crop during the turn. The processor **261** of the transport vehicle **200** performs a control to increase the distance between the harvester **100** and the transport vehicle **200** while the harvester **100** makes a turn, compared to when the harvester **100** is traveling while harvesting the crop.

As described with referring to FIG. **9** and FIG. **10****,** the harvester **100** and the transport vehicle **200** travel alongside each other while maintaining such a positional relationship that the transport vehicle **200** can receive the harvested crop discharged from the harvester **100.** By having the harvester **100,** which harvests the crop, and the transport vehicle **200,** which receives and stores the harvested crop discharged from the harvester **100,** travel alongside each other, it is possible to efficiently harvest the crop in the field **70.**

On the other hand, the control to turn the harvester **100** and the transport vehicle **200** while maintaining such a positional relationship becomes complicated. In the present embodiment, by increasing the distance between the harvester **100** and the transport vehicle **200** while the harvester **100** is making a turn, it is possible to prevent the presence of the transport vehicle **200** from interfering with the smooth turning of the harvester **100.** Even when the harvester **100** makes a complicated turn involving backing up, for example, the harvester **100** can make the turn smoothly.

By increasing the distance between the harvester **100** and the transport vehicle **200** while the harvester **100** is making a turn, it is possible to prevent the presence of the harvester **100** from interfering with the smooth turning of the transport vehicle **200.**

By stopping the discharge of the harvested crop while the harvester **100** is making a turn, it is possible to allow the harvester **100** to turn smoothly. By increasing the distance between the harvester **100** and the transport vehicle **200** after the harvester **100** has stopped discharging the harvested crop, it is possible to prevent the harvested crop from being discharged to anything other than the transport vehicle **200.**

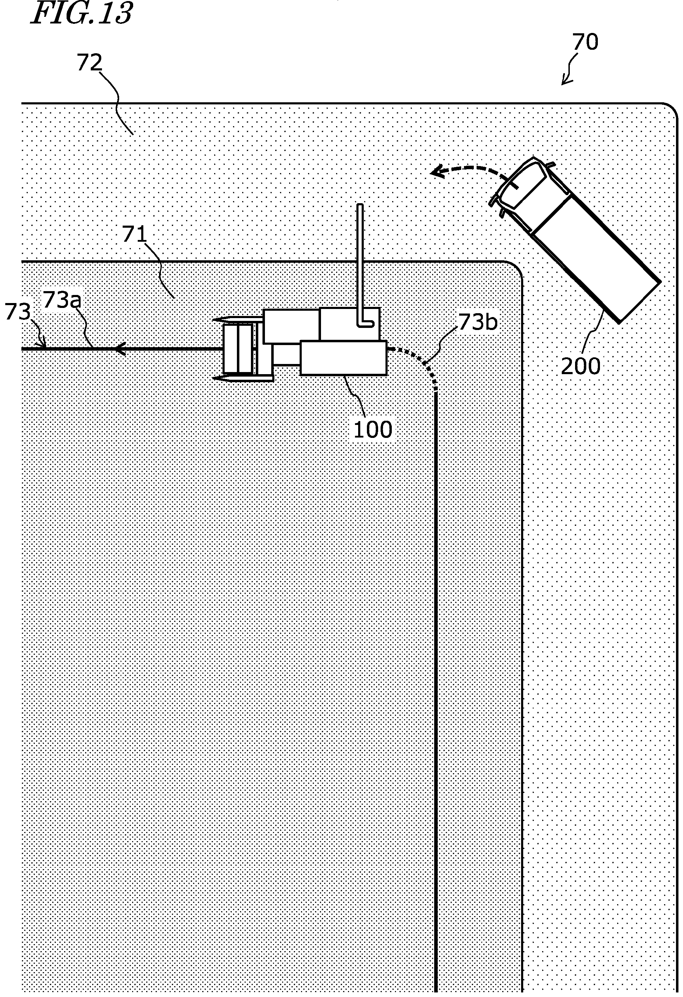

FIG. **13** is a diagram showing the harvester **100** having turned and traveling along the next main route **73a.** The processor **161** calculates the geographic coordinates of the rear end of the harvester **100** based on the positional relationship between the reference position and the rear end of the harvester **100** and information of the geographic coordinates acquired from the GNSS unit **120.** The processor **161** determines whether the rear end of the harvester **100** has gone past end position of the turning route **73b** and is located along the next main route **73a** (step S106).

If it is determined that the rear end of the harvester **100** has gone past the end position of the turning route **73b** and is located along the next main route **73a,** the processor **161** executes a control to cause the ECU **167** to resume the crop harvesting operation. The ECU **167** controls the operation of the power transmission mechanism **141** to cause various devices that perform the crop harvesting operation to perform the desired operation. In parallel, the processor **161** transmits, to the transport vehicle **200** via the communication device **190,** course-of-travel information indicating that the turn has been complete. Upon receiving the course-of-travel information, the processor **261** causes the ECU **265** to control the transport vehicle **200** to travel alongside the harvester **100** (step S101).

The processor **261** of the transport vehicle **200** calculates the geographic coordinates of a position adjacent to the side of the harvester **100** based on information of the geographic coordinates and orientation of the harvester **100,** and sets the position of the calculated geographic coordinates as the target position. The processor **261** causes the ECU **265** to control the transport vehicle **200** to travel to the target position.

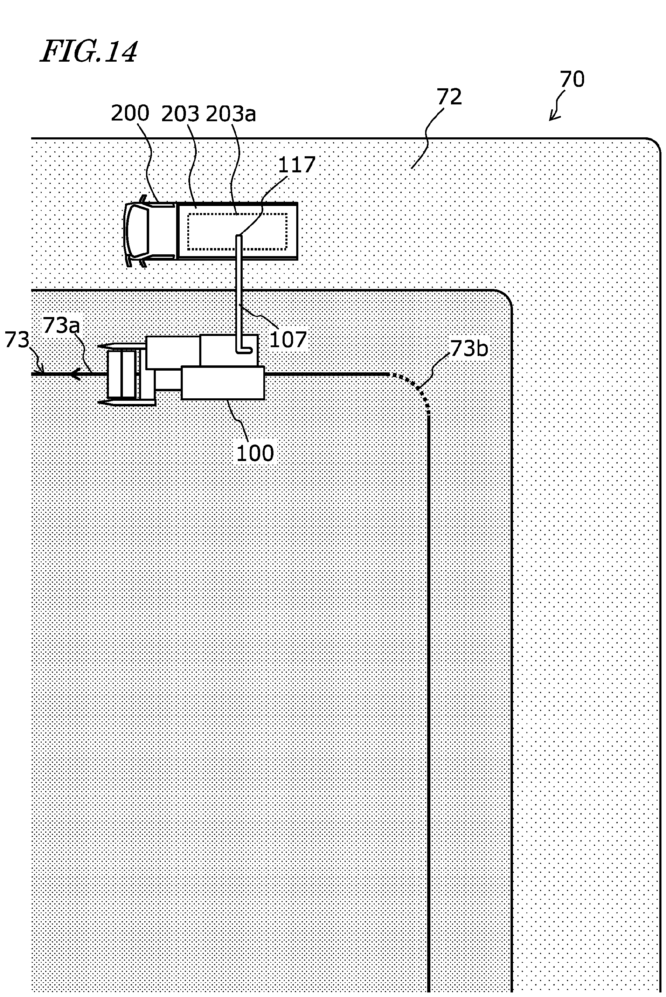

FIG. **14** is a diagram showing the transport vehicle **200** having reached the position (target position) for traveling alongside the harvester **100.** By moving the transport vehicle **200** to a position where the transport vehicle **200** can receive the harvested crop discharged from the harvester **100,** it is possible to resume the transfer of the harvested crop from the harvester **100** to the transport vehicle **200.**

The harvester **100** and the transport vehicle **200** repeat the operations of steps S101 to S106. This allows the harvesting operation to be performed by the harvester **100,** which harvests crop while traveling in the field **70** by automated driving, and the transport vehicle **200,** which receives and stores the harvested crop discharged from the harvester **100** while traveling alongside the harvester **100** by automated driving. In order to end the harvesting operation in the field **70,** the control shown in FIG. **8** is ended.

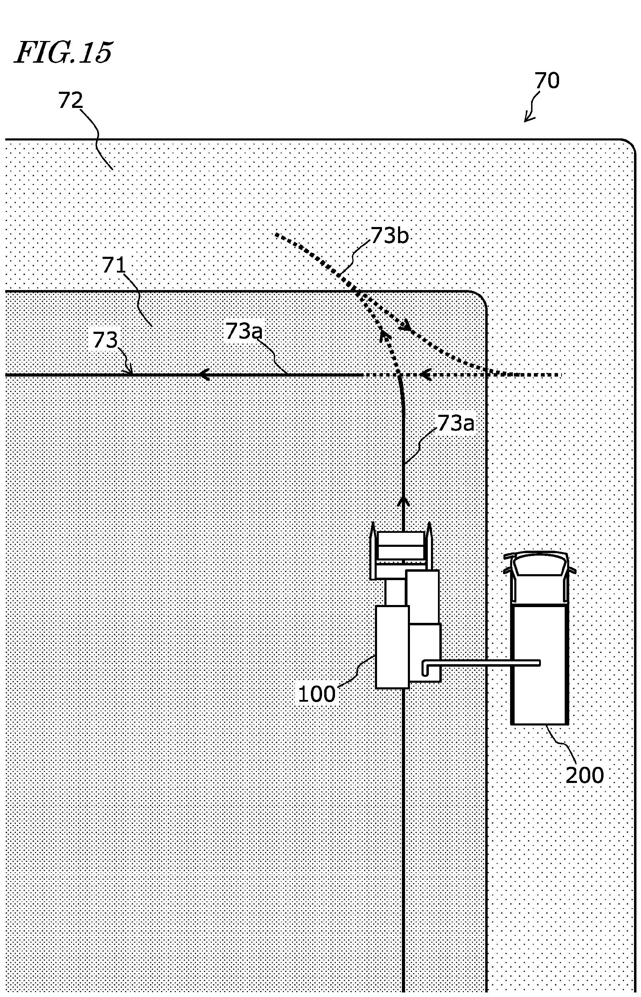

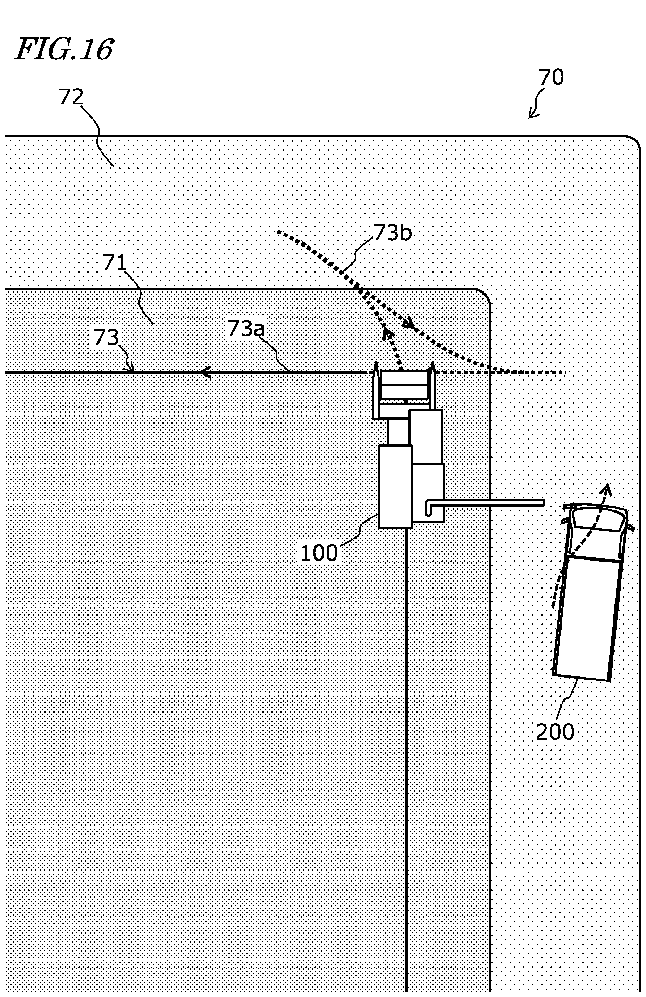

FIG. **15** shows an example of the complicated turning route **73b** involving backing up. In step S103, if it is determined that the distance between the front end of the harvester **100** and the start position of the turning route **73b** is less than or equal to a predetermined distance, the processor **161** causes the ECU **167** to execute a control to stop the discharge of the harvested crop from the discharge device **107.** Thus, the discharge of the harvested crop from the discharge device **107** is stopped (step S104). Upon receiving the stop information and the course-of-travel information, the processor **261** causes the ECU **265** to execute a control to cause the transport vehicle **200** to move away from the harvester **100** (step S105). FIG. **16** is a diagram showing how the transport vehicle **200,** which has traveled alongside the harvester **100,** moves away from the harvester **100.**

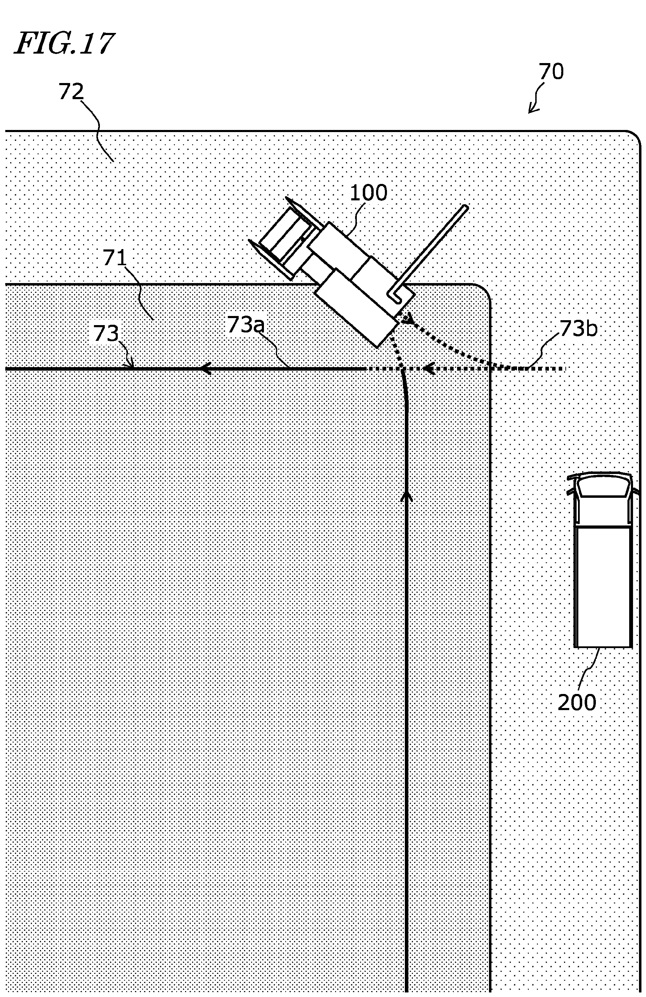

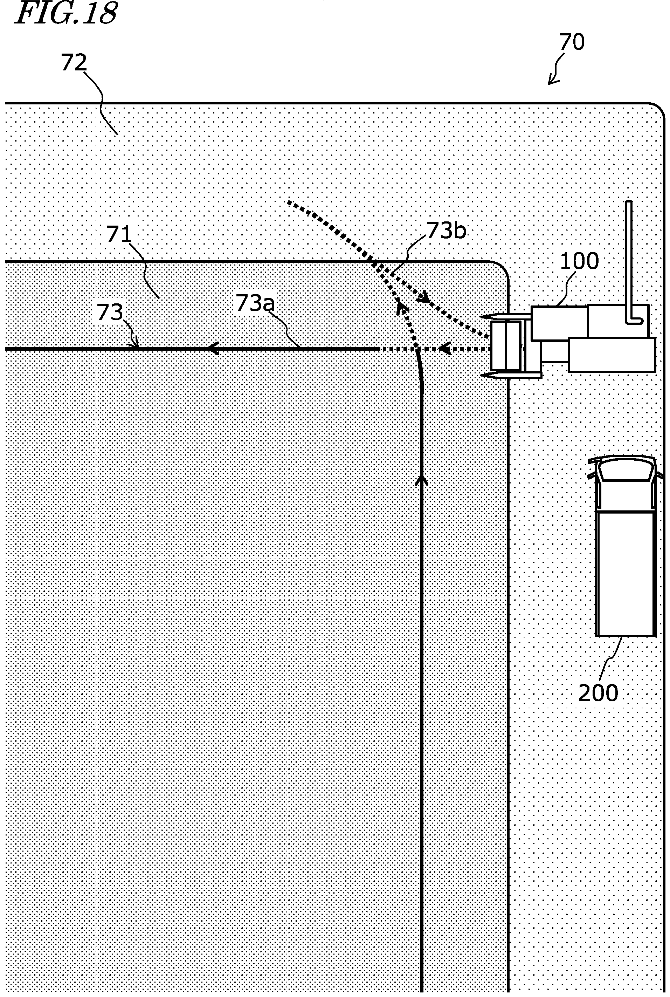

FIG. **17** and FIG. **18** show the harvester **100** turning along the turning route **73b.** Along the turning route **73b** of this example, the harvester **100** changes its direction of travel by moving forward while turning left and then moving backward while turning right. The processor **161** causes the ECU **167** to execute a control to stop harvesting the crop during the turn. The processor **261** of the transport vehicle **200** performs a control to increase the distance between the harvester **100** and the transport vehicle **200** while the harvester **100** makes a turn, compared to when the harvester 100 is traveling while harvesting the crop. By increasing the distance between the harvester **100** and the transport vehicle **200** while the harvester **100** makes a turn, the harvester **100** can smoothly make a turn even when the harvester **100** is making a complicated turn involving backing up.

Next, an example of the operation of having the transport vehicle **200** wait at a predetermined position while the harvested crop accumulated in the tank **106** of the harvester **100** is less than a first predetermined amount will be described.

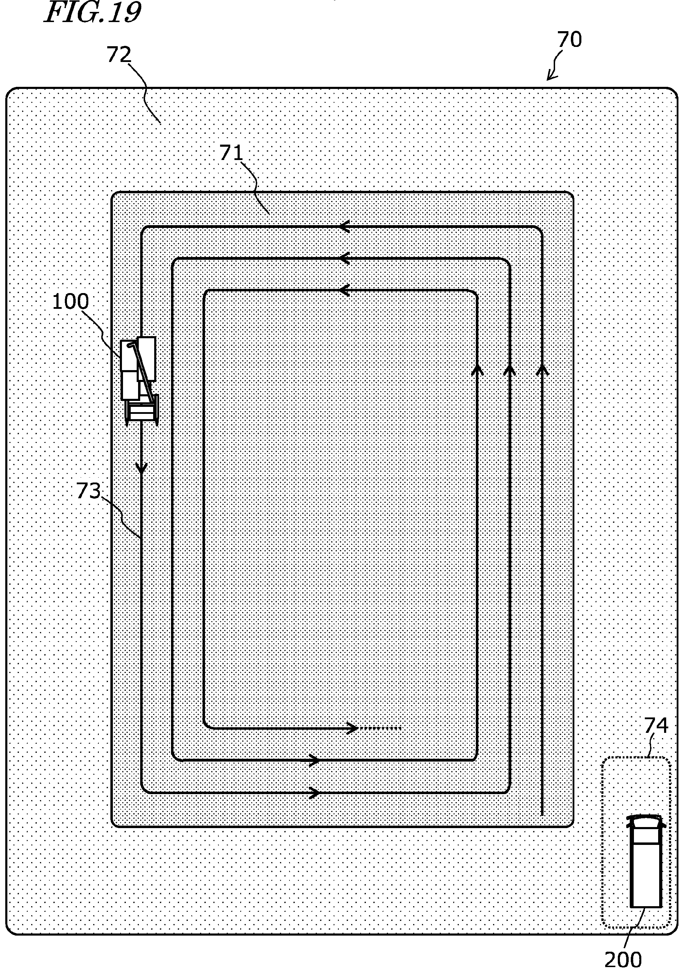

FIG. **19** is a diagram showing the transport vehicle **200** waiting at a predetermined position **74** in the field **70.** The predetermined position **74** can be set at any position that does not interfere with the harvesting operation by the harvester **100.** The predetermined position **74** may be set to a position where the harvesting operation in the work area **71** has already been completed, as long as it does not interfere with the harvesting operation by the harvester **100.** The predetermined position **74** may also be set to a position outside the field **70.**

When the harvester **100** is harvesting crop, the processor **161** determines whether the harvested crop accumulated in the tank **106** is equal to or greater than the first predetermined amount. For example, the processor **161** determines whether the weight value of the harvested crop in the tank **106** detected by the load sensor **156** is equal to or greater than a first predetermined weight. The first predetermined weight is, for example, 50 to 90% of the maximum weight of the harvested crop that can be stored in the tank **106,** but is not limited to that value.

While the harvested crop accumulated in the tank **106** is less than the first predetermined weight, the processor **161** does not transmit a parallel run instruction to cause the transport vehicle **200** to travel alongside the harvester **100.** The processor **261** performs a control to cause the transport vehicle **200** to wait at the predetermined position **74** while the processor **261** has not received the parallel run instruction.

If it is determined that the harvested crop accumulated in the tank **106** has become equal to or greater than the first predetermined weight, the processor **161** transmits, to the transport vehicle **200** via the communication device **190,** the parallel run instruction to cause the transport vehicle **200** to travel alongside the harvester **100.** Upon receiving the parallel run instruction, the processor **261** performs a control to move the transport vehicle **200** to a position where the transport vehicle **200** can receive the harvested crop discharged from the harvester **100.** The control of moving the transport vehicle **200** to a position where the transport vehicle **200** can receive the harvested crop discharged from the harvester **100** is as described above using FIG. **8****.**

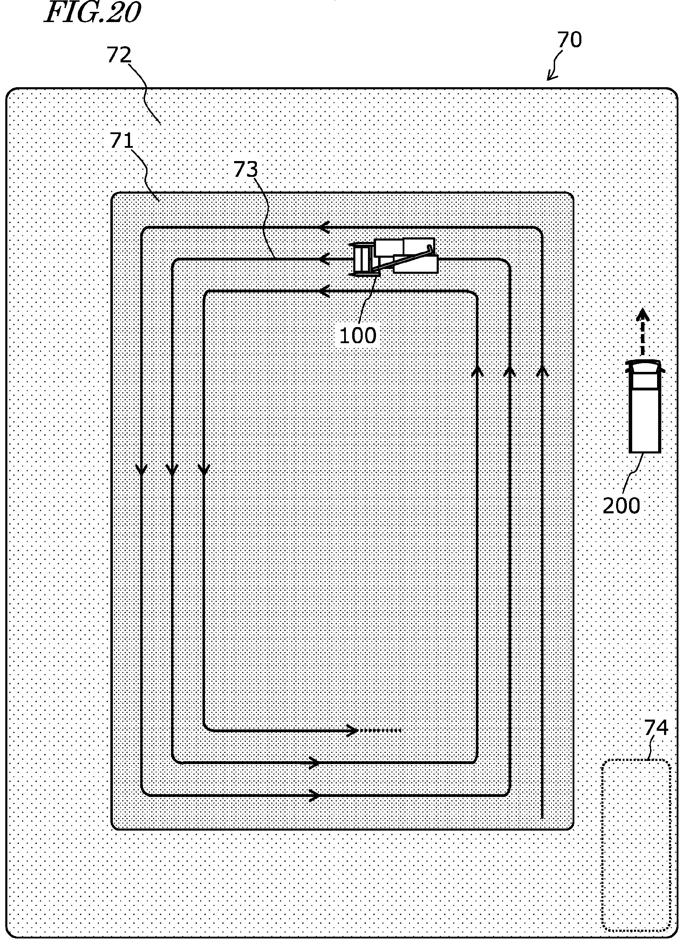

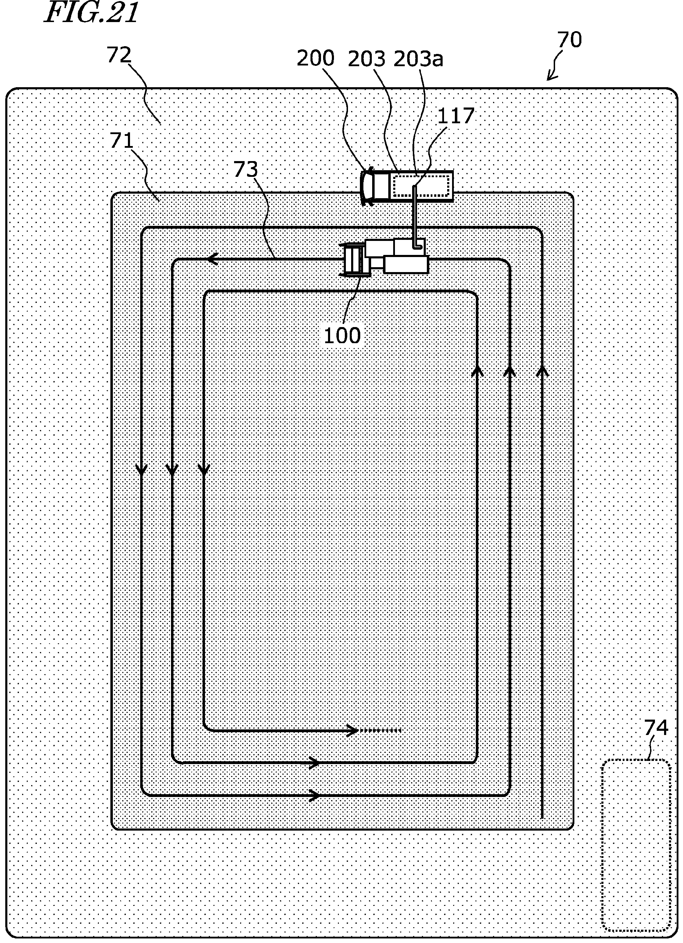

FIG. **20** is a diagram showing the transport vehicle **200** moving toward a position (target position) where the transport vehicle **200** can receive the harvested crop discharged from the harvester **100.** FIG. **21** is a diagram showing the transport vehicle **200** having reached the position where the transport vehicle **200** can receive the harvested crop discharged from the harvester **100.** When the position of the discharge outlet **117** is within the first range **203a,** the processor **261** transmits, to the harvester **100** via the communication device **290,** permission information indicating that the discharge of the harvested crop from the discharge device **107** is permitted.

Upon receiving the permission information, the processor **161** causes the ECU **167** to execute a control for the operation of discharging the harvested crop from the discharge device **107.** The harvested crop discharged from the discharge outlet **117** enters the load bed **203** and is stored in the load bed **203.** As the harvester **100** and the transport vehicle **200** execute the operation described above using FIG. **8****,** the harvesting operation can be performed by the harvester **100,** which harvests crop while traveling in the field **70** by automated driving, and the transport vehicle **200,** which receives and stores the harvested crop discharged from the harvester **100** while traveling alongside the harvester **100** by automated driving.

As the harvested crop is transferred from the harvester **100** to the transport vehicle **200** when the harvested crop accumulated in the harvester **100** has become equal to or greater than the first predetermined amount, it is possible to shorten the amount of time for executing a control to cause the harvester **100** and the transport vehicle **200** to travel alongside each other.

Next, an example of the operation of moving the transport vehicle **200** to a building for storing the harvested crop when the harvested crop has accumulated to a second predetermined amount or more in the load bed **203** of the transport vehicle **200,** will be described.

While the transport vehicle **200** is receiving the harvested crop discharged from the harvester **100,** the processor **261** determines whether the amount of the harvested crop accumulated in the load bed **203** is equal to or greater than the second predetermined amount. For example, the processor **261** determines whether the weight value of the harvest stored in the load bed **203** detected by the load sensor **256** is equal to or greater than the second predetermined weight. The second predetermined weight is, for example, 80 to 100% of the maximum weight of the harvested crop that can be stored in the load bed **203,** but is not limited to that value.

While the harvested crop accumulated in the load bed **203** is less than the second predetermined weight, the processor **261** continues to control the operation in which the transport vehicle **200** receives the harvested crop discharged from the harvester **100.** If it is determined that the harvested crop accumulated in the load bed **203** has become equal to or greater than the second predetermined weight, the processor **261** transmits, to the harvester **100** via the communication device **190,** a stop instruction to stop the discharge of the harvested crop from the discharge device **107.** Upon receiving receives the stop instruction, the processor **161** causes the ECU **167** to execute a control to stop the discharge of the harvested crop from the discharge device **107.**

If it is determined that the harvested crop accumulated in the load bed **203** has become equal to or greater than the second predetermined weight, the processor **261** performs a control to move the transport vehicle **200** to the building for storing the harvested crop.

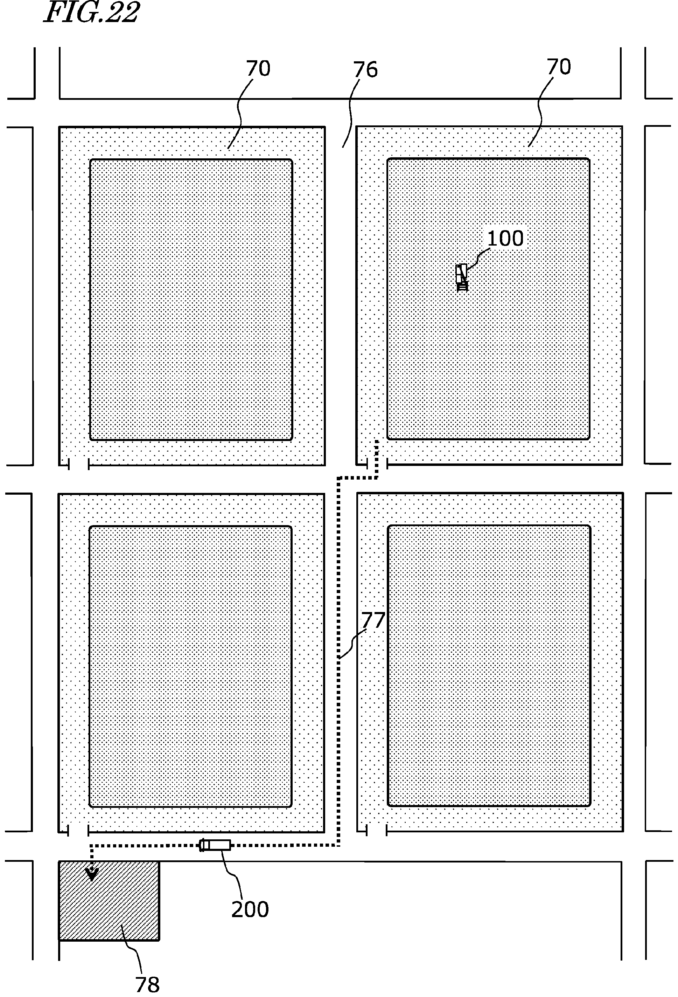

FIG. **22** is a diagram showing the transport vehicle **200** moving to the storage shed **78** for storing the harvested crop. A target route **77** for moving from the field **70** to the storage shed **78** is set in advance. The target route **77** is, for example, stored in advance in the storage device **264** of the transport vehicle **200.** The processor **261** causes the ECU **265** to control the transport vehicle **200** to automatically travel along the target route **77.**

When the transport vehicle **200** arrives at the storage shed **78,** the harvested crop in the load bed **203** is transferred to the storage shed **78.** The transport vehicle **200,** with its load bed **203** empty, may return to the field **70** along the same route as the target route **77.**

While the transport vehicle **200** is a truck in the above description of the embodiment, the transport vehicle **200** is not limited thereto, and may be a tractor to which a load bed is connected, for example.

The control system **10** of the present embodiment can be retrofitted to agricultural machines that do not have those functions. Such systems can be manufactured and sold independently of agricultural machines. Computer programs used in such systems can also be manufactured and sold independently of agricultural machines. Computer programs can be provided, for example, stored in a computer-readable non-transitory storage medium. Computer programs can also be provided as downloads via an electrical telecommunication line (e.g., the Internet).

Some or all of the processes executed by the processors **161** and **261** in the control system **10** may be executed by other devices. Such other devices may be the processor **660** of the management device **600,** the processor **460** of the terminal device **400,** and at least one of the operation terminals **131.** In such a case, the processors of such other devices may be included in the controller of the control system **10.**

As described above, the present disclosure includes a control system, a control method, and a transport vehicle set forth below.

### [Item 1]

A control system **10** for controlling a harvesting operation performed by a harvester **100,** which harvests crop while traveling in a field **70** by automated driving, and a transport vehicle **200,** which receives harvested crop discharged from the harvester **100** while traveling alongside the harvester **100** by automated driving, the control system including:
a first controller **160** that controls an operation of discharging the harvested crop of the harvester **100;** and
a second controller **260** that controls an operation of the transport vehicle **200** so that the transport vehicle **200** travels by automated driving,
wherein the second controller **260** performs a control to increase a distance between the harvester **100** and the transport vehicle **200** while the harvester **100** makes a turn, compared to when the harvester **100** is traveling while harvesting the crop.

The harvester **100** and the transport vehicle **200** travel alongside each other while maintaining such a positional relationship that the transport vehicle **200** can receive the harvested crop discharged from the harvester **100.** By having the harvester **100,** which harvests the crop, and the transport vehicle **200,** which receives and stores the harvested crop discharged from the harvester **100,** travel alongside each other, it is possible to efficiently harvest the crop in the field **70.** On the other hand, a control to turn the harvester **100** and the transport vehicle **200** while maintaining such a positional relationship will be complicated.

By increasing the distance between the harvester **100** and the transport vehicle **200** while the harvester **100** is making a turn, it is possible to prevent the presence of the transport vehicle **200** from interfering with the smooth turning of the harvester **100.** Even when the harvester **100** makes a complicated turn involving backing up, for example, the harvester **100** can make the turn smoothly.

By increasing the distance between the harvester **100** and the transport vehicle **200** while the harvester **100** is making a turn, it is possible to prevent the presence of the harvester **100** from interfering with the smooth turning of the transport vehicle **200.**

### [Item 2]

The control system **10** according to item 1, wherein:
the first controller **160** performs a control to stop the discharge of the harvested crop from the harvester **100** while the harvester **100** is making a turn; and
the second controller **260** performs a control to increase the distance between the harvester **100** and the transport vehicle **200** after the first controller **160** performs a control to stop the discharge of the harvested crop from the harvester **100.**

By stopping the discharge of the harvested crop while the harvester **100** is making a turn, it is possible to allow the harvester **100** to turn smoothly. By increasing the distance between the harvester **100** and the transport vehicle **200** after the harvester **100** has stopped discharging the harvested crop, it is possible to prevent the harvested crop from being discharged to anything other than the transport vehicle **200.**

### [Item 3]

The control system **10** according to item 1 or 2, wherein when the harvester **100** completes the turn, the second controller **260** performs a control to move the transport vehicle **200** to a position where the transport vehicle **200** can receive the harvested crop discharged from the harvester **100.**

It is possible to resume the transfer of the harvested crop from the harvester **100** to the transport vehicle **200.**

### [Item 4]

The control system **10** according to any one of items 1 to 3, wherein:
when the harvested crop accumulated in the harvester **100** is less than a first predetermined amount, the second controller **260** performs a control to cause the transport vehicle **200** to wait at a predetermined position; and
when the harvested crop accumulated in the harvester **100** has become equal to or greater than the first predetermined amount, the second controller **260** performs a control to move the transport vehicle **200** to a position where the transport vehicle **200** can receive the harvested crop discharged from the harvester **100.**

When the harvested crop accumulated in the harvester **100** has become equal to or greater than the predetermined amount, the harvested crop can be transferred from the harvester **100** to the transport vehicle **200.**

### [Item 5]

The control system **10** according to any one of items 1 to 4, wherein:
when the harvested crop accumulated in the transport vehicle **200** has become equal to or greater than the second predetermined amount,
the first controller **160** performs a control to stop the discharge of the harvested crop from the harvester **100;** and
the second controller **260** performs a control to move the transport vehicle **200** to a building for storing the harvested crop.

When the harvested crop accumulated in the transport vehicle **200** has become equal to or greater than the predetermined amount, the harvested crop can be transferred from the transport vehicle **200** to a building such as a shed.

### [Item 6]

The control system **10** according to any one of items 1 to 5, further including a sensor **125, 225** that senses at least one of the harvester **100** and the transport vehicle **200** to output sensor data,
wherein when the harvester **100** discharges the harvested crop to the transport vehicle **200,** the second controller **260** controls, based on the sensor data, travel of the transport vehicle **200** to maintain such a positional relationship between the transport vehicle **200** and the harvester **100** that the transport vehicle **200** can receive the harvested crop discharged from the harvester **100.**

By using sensor data, it is possible to perform high-precision position control.

### [Item 7]

A transport vehicle **200** for transporting harvested crop that is harvested in a field **70,** the transport vehicle **200** including:
a container **203** that receives and stores the harvested crop discharged from a harvester **100** that harvests crop in the field **70;** and
a controller **260** that controls an operation of the transport vehicle **200** so that the transport vehicle **200** travels by automated driving,
wherein the controller **260** is configured to:
   perform a control to cause the transport vehicle **200** to travel alongside the harvester **100** when the harvester **100** is traveling while harvesting the crop and discharging the harvested crop; and
   perform a control to increase a distance between the harvester **100** and the transport vehicle **200** when the harvester **100** is making a turn, compared to when the harvester **100** is traveling while harvesting the crop.

By increasing the distance between the harvester **100** and the transport vehicle **200** while the harvester **100** is making a turn, it is possible to prevent the presence of the transport vehicle **200** from interfering with the smooth turning of the harvester **100.** Even when the harvester **100** makes a complicated turn involving backing up, for example, the harvester **100** can make the turn smoothly.

By increasing the distance between the harvester **100** and the transport vehicle **200** while the harvester **100** is making a turn, it is possible to prevent the presence of the harvester **100** from interfering with the smooth turning of the transport vehicle **200.**

### [Item 8]

The transport vehicle **200** according to item 7, wherein:
the harvester **100** stops the discharge of the harvested crop while the harvester **100** is making a turn; and
the controller **260** performs a control to increase the distance between the harvester **100** and the transport vehicle **200** after the harvester **100** stops the discharge of the harvested crop.

By increasing the distance between the harvester **100** and the transport vehicle **200** after the harvester **100** has stopped discharging the harvested crop, it is possible to prevent the harvested crop from being discharged to anything other than the transport vehicle **200.**

### [Item 9]

The transport vehicle **200** according to item 7 or 8, wherein when the harvester **100** completes the turn, the controller **260** performs a control to move the transport vehicle **200** to a position where the transport vehicle **200** can receive the harvested crop discharged from the harvester **100.**

It is possible to resume the transfer of the harvested crop from the harvester **100** to the transport vehicle **200.**

### [Item 10]

The transport vehicle **200** according to any one of items 7 to 9, wherein:
when the harvested crop accumulated in the harvester **100** is less than a first predetermined amount, the controller **260** performs a control to cause the transport vehicle **200** to wait at a predetermined position; and
when the harvested crop accumulated in the harvester **100** has become equal to or greater than the first predetermined amount, the controller **260** performs a control to move the transport vehicle **200** to a position where the transport vehicle **200** can receive the harvested crop discharged from the harvester **100.**

When the harvested crop accumulated in the harvester **100** has become equal to or greater than the predetermined amount, the harvested crop can be transferred from the harvester **100** to the transport vehicle **200.**

### [Item 11]

The transport vehicle **200** according to any one of items 7 to 10, wherein:
when the harvested crop accumulated in the container has become equal to or greater than the second predetermined amount,
the controller **260** performs a control to move the transport vehicle **200** to a building for storing the harvested crop.

When the harvested crop accumulated in the transport vehicle **200** has become equal to or greater than the predetermined amount, the harvested crop can be transferred from the transport vehicle **200** to a building such as a shed.

### [Item 12]

The transport vehicle **200** according to any one of items 7 to 11, further including a sensor that senses the harvester **100** to output sensor data,
wherein when the harvester **100** discharges the harvested crop to the transport vehicle **200,** the controller **260** controls, based on the sensor data, travel of the transport vehicle **200** to maintain such a positional relationship between the transport vehicle **200** and the harvester **100** that the transport vehicle **200** can receive the harvested crop discharged from the harvester **100.**

By using sensor data, it is possible to perform high-precision position control.

### [Item 13]

A control method for controlling a harvesting operation performed by a harvester **100,** which harvests crop while traveling in a field **70** by automated driving, and a transport vehicle **200,** which receives harvested crop discharged from the harvester **100** while traveling alongside the harvester **100** by automated driving, the control method including:
controlling an operation of discharging the harvested crop of the harvester **100;** and
performing a control to increase a distance between the harvester **100** and the transport vehicle **200** while the harvester **100** makes a turn, compared to when the harvester **100** is traveling while harvesting the crop.

By increasing the distance between the harvester **100** and the transport vehicle **200** while the harvester **100** is making a turn, it is possible to prevent the presence of the transport vehicle **200** from interfering with the smooth turning of the harvester **100.** Even when the harvester **100** makes a complicated turn involving backing up, for example, the harvester **100** can make the turn smoothly.

By increasing the distance between the harvester **100** and the transport vehicle **200** while the harvester **100** is making a turn, it is possible to prevent the presence of the harvester **100** from interfering with the smooth turning of the transport vehicle **200.**

### [Item 14]

A control method for controlling a transport vehicle **200** that travels by automated driving and transports harvested crop that is harvested in a field **70,** wherein:
the transport vehicle **200** includes a container that receives and stores the harvested crop discharged from a harvester **100** that harvest crop in the field **70,** the control method including:
performing a control to cause the transport vehicle **200** to travel alongside the harvester **100** when the harvester **100** is traveling while harvesting the crop and discharging the harvested crop; and
performing a control to increase a distance between the harvester **100** and the transport vehicle **200** when the harvester **100** is making a turn, compared to when the harvester **100** is traveling while harvesting the crop.

By increasing the distance between the harvester **100** and the transport vehicle **200** while the harvester **100** is making a turn, it is possible to prevent the presence of the transport vehicle **200** from interfering with the smooth turning of the harvester **100.** Even when the harvester **100** makes a complicated turn involving backing up, for example, the harvester **100** can make the turn smoothly.

By increasing the distance between the harvester **100** and the transport vehicle **200** while the harvester **100** is making a turn, it is possible to prevent the presence of the harvester **100** from interfering with the smooth turning of the transport vehicle **200.**

### INDUSTRIAL APPLICABILITY

The technology of the present disclosure is particularly useful in the field of agricultural machines.

### REFERENCE SIGNS LIST

1: Agricultural management system, 10: Control system, 70: Field, 71: Work area, 72: Headland, 73: Target route, 73a: Main route, 73b: Turning route, 74: Predetermined position, 76: Road, 77: Target route, 78: Storage shed, 80: Network, 100: Agricultural machine (harvester), 101: Vehicle body, 102: Travel device, 103: Cutting device, 104: Conveyer device, 105: Threshing device, 106: Tank, 107: Discharge device, 108: Straw disposal device, 109: Reel, 110: Cabin, 111: Prime mover (engine), 112: Transmission, 117: Discharge outlet, 120: Positioning device (GNSS unit), 121: GNSS receiver, 122: RTK receiver, 123: Inertial measurement unit (IMU), 124: Processing circuit, 125: Lidar sensor, 126: Camera, 127: Obstacle sensor, 131: Operation terminal, 132: Operation switches, 133: Buzzer, 140: Drive device, 141: Power transmission mechanism, 150: Sensors, 151: Operation lever sensor, 152: Rotation sensor, 156: Load sensor, 160: Controller, 161: Processor, 162: RAM, 163: ROM, 164: Storage device, 165 to 167: ECUs, 190: Communication device, 200: Transport vehicle, 201: Vehicle body, 202: Wheel, 203: Load bed (container), 210: Cabin, 211: Primer mover (engine), 212: Transmission, 220: Positioning device (GNSS unit), 221: GNSS receiver, 222: RTK receiver, 223: Inertial measurement unit (IMU), 224: Processing circuit, 225: Lidar sensor, 226: Camera, 227: Obstacle sensor, 231: Operation terminal, 232: Operation switches, 233: Buzzer, 240: Drive device, 250: Sensors, 251: Steering wheel sensor, 252: Rotation sensor, 253: Steer angle sensor, 256: Load sensor, 260: Controller, 261: Processor, 262: RAM, 263: ROM, 264: Storage device, 265, 266: ECUs, 290: Communication device, 400: Terminal device, 420: Input device, 430: Display device, 450: Storage device, 460: Processor, 470: ROM, 480: RAM, 490: Communication device, 600: Management device, 660: Processor, 650: Storage device, 670: ROM, 680: RAM, 690: Communication device

## Claims

1. A control system for controlling a harvesting operation performed by an agricultural machine, which harvests crop while traveling in a field by automated driving, and a transport vehicle, which receives harvested crop discharged from the agricultural machine while traveling alongside the agricultural machine by automated driving, the control system comprising:
a first controller that controls an operation of discharging the harvested crop of the agricultural machine; and
a second controller that controls an operation of the transport vehicle so that the transport vehicle travels by automated driving,
wherein the second controller performs a control to increase a distance between the agricultural machine and the transport vehicle while the agricultural machine makes a turn, compared to when the agricultural machine is traveling while harvesting the crop.

2. The control system according to claim 1, wherein:
the first controller performs a control to stop the discharge of the harvested crop from the agricultural machine while the agricultural machine is making a turn; and
the second controller performs a control to increase the distance between the agricultural machine and the transport vehicle after the first controller performs a control to stop the discharge of the harvested crop from the agricultural machine.

3. The control system according to claim 1 or 2, wherein when the agricultural machine completes the turn, the second controller performs a control to move the transport vehicle to a position where the transport vehicle can receive the harvested crop discharged from the agricultural machine.

4. The control system according to claim 1 or 2, wherein:
when the harvested crop accumulated in the agricultural machine is less than a first predetermined amount, the second controller performs a control to cause the transport vehicle to wait at a predetermined position; and
when the harvested crop accumulated in the agricultural machine has become equal to or greater than the first predetermined amount, the second controller performs a control to move the transport vehicle to a position where the transport vehicle can receive the harvested crop discharged from the agricultural machine.

5. The control system according to claim 1 or 2, wherein:
when the harvested crop accumulated in the transport vehicle has become equal to or greater than the second predetermined amount,
the first controller performs a control to stop the discharge of the harvested crop from the agricultural machine; and
the second controller performs a control to move the transport vehicle to a building for storing the harvested crop.

6. The control system according to claim 1 or 2, further comprising a sensor that senses at least one of the agricultural machine and the transport vehicle to output sensor data,
wherein when the agricultural machine discharges the harvested crop to the transport vehicle, the second controller controls, based on the sensor data, travel of the transport vehicle to maintain such a positional relationship between the transport vehicle and the agricultural machine that the transport vehicle can receive the harvested crop discharged from the agricultural machine.

7. A transport vehicle for transporting harvested crop that is harvested in a field, the transport vehicle comprising:
a container that receives and stores the harvested crop discharged from an agricultural machine that harvests crop in the field; and
a controller that controls an operation of the transport vehicle so that the transport vehicle travels by automated driving,
wherein the controller is configured to:
perform a control to cause the transport vehicle to travel alongside the agricultural machine when the agricultural machine is traveling while harvesting the crop and discharging the harvested crop; and
perform a control to increase a distance between the agricultural machine and the transport vehicle when the agricultural machine is making a turn, compared to when the agricultural machine is traveling while harvesting the crop.

8. The transport vehicle according to claim 7, wherein:
the agricultural machine stops the discharge of the harvested crop while the agricultural machine is making a turn; and
the controller performs a control to increase the distance between the agricultural machine and the transport vehicle after the agricultural machine stops the discharge of the harvested crop.

9. The transport vehicle according to claim 7 or 8, wherein when the agricultural machine completes the turn, the controller performs a control to move the transport vehicle to a position where the transport vehicle can receive the harvested crop discharged from the agricultural machine.

10. The transport vehicle according to claim 7 or 8, wherein:
when the harvested crop accumulated in the agricultural machine is less than a first predetermined amount, the controller performs a control to cause the transport vehicle to wait at a predetermined position; and
when the harvested crop accumulated in the agricultural machine has become equal to or greater than the first predetermined amount, the controller performs a control to move the transport vehicle to a position where the transport vehicle can receive the harvested crop discharged from the agricultural machine.

11. The transport vehicle according to claim 7 or 8, wherein:
when the harvested crop accumulated in the container has become equal to or greater than the second predetermined amount,
the controller performs a control to move the transport vehicle to a building for storing the harvested crop.

12. The transport vehicle according to claim 7 or 8, further comprising a sensor that senses the agricultural machine to output sensor data,
wherein when the agricultural machine discharges the harvested crop to the transport vehicle, the controller controls, based on the sensor data, travel of the transport vehicle to maintain such a positional relationship between the transport vehicle and the agricultural machine that the transport vehicle can receive the harvested crop discharged from the agricultural machine.

13. A control method for controlling a harvesting operation performed by an agricultural machine, which harvests crop while traveling in a field by automated driving, and a transport vehicle, which receives harvested crop discharged from the agricultural machine while traveling alongside the agricultural machine by automated driving, the control method comprising:
controlling an operation of discharging the harvested crop of the agricultural machine; and
performing a control to increase a distance between the agricultural machine and the transport vehicle while the agricultural machine makes a turn, compared to when the agricultural machine is traveling while harvesting the crop.

14. A control method for controlling a transport vehicle that travels by automated driving and transports harvested crop that is harvested in a field, wherein:
the transport vehicle includes a container that receives and stores the harvested crop discharged from an agricultural machine that harvests crop in the field, the control method comprising:
performing a control to cause the transport vehicle to travel alongside the agricultural machine when the agricultural machine is traveling while harvesting the crop and discharging the harvested crop; and
performing a control to increase a distance between the agricultural machine and the transport vehicle when the agricultural machine is making a turn, compared to when the agricultural machine is traveling while harvesting the crop.
